(19) **Europäisches Patentamt / European Patent Office / Office européen des brevets**

(11) **EP 3 241 921 B1**

(12) **EUROPEAN PATENT SPECIFICATION**

(45) Date of publication and mention
of the grant of the patent:
**18.10.2023 Bulletin 2023/42**

(21) Application number: **16773180.1**

(22) Date of filing: **31.03.2016**

(51) International Patent Classification (IPC):
*C23C 2/06* (2006.01)     *C23C 2/26* (2006.01)
*B32B 15/01* (2006.01)    *C23C 28/00* (2006.01)
*C22C 18/04* (2006.01)

(52) Cooperative Patent Classification (CPC):
**C23C 28/30; B32B 15/013; C22C 18/04;
C23C 2/06; C23C 2/26; C23C 28/32;
C23C 28/3225; C23C 28/34; C23C 28/345**

(86) International application number:
**PCT/JP2016/060800**

(87) International publication number:
**WO 2016/159300 (06.10.2016 Gazette 2016/40)**

(54) **METHOD OF OBTAINING A HOT PRESSED STEEL MATERIAL**

VERFAHREN ZUM ERZIELEN EINES HEISSGEPRÄSSTEN STAHLMATERIALS

PROCÉDÉ D'OBTENIR UN MATÉRIAU D'ACIER PRESSÉ À CHAUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2015 JP 2015073554**

(43) Date of publication of application:
**08.11.2017 Bulletin 2017/45**

(73) Proprietor: **Nippon Steel Corporation
Tokyo (JP)**

(72) Inventors:
• **SENGOKU, Akihiro
Tokyo 100-8071 (JP)**
• **AKIOKA, Koji
Tokyo 100-8071 (JP)**

• **KAWAMURA, Yasuaki
Tokyo 100-8071 (JP)**

(74) Representative: **Vossius & Partner
Patentanwälte Rechtsanwälte mbB
Siebertstrasse 3
81675 München (DE)**

(56) References cited:
EP-A1- 1 253 218    EP-A2- 0 508 479
JP-A- H0 953 184    JP-A- H04 246 193
JP-A- 2001 152 355   JP-A- 2002 206 174
JP-A- 2004 270 029   JP-A- 2013 001 981
JP-A- 2014 111 785   JP-A- 2014 514 436
KR-A- 20030 053 830  US-A- 5 283 131
US-A1- 2014 048 181

**Description**

Technical Field

The present invention relates to a method of obtaining a hot pressed steel material.

Background Art

These days, to protect the environment and prevent global warming, the suppression of the consumption of fossil fuel is increasingly demanded, and the demand influences various manufacturing industries. For example, automobiles, which are indispensable to daily life and activity as a moving means, are no exception, and improvements in fuel efficiency etc. by the weight reduction of car bodies etc. are required. However, for automobiles, simply achieving a weight reduction of the car body is not permitted in terms of the functionality of the product, and it is necessary to ensure proper safety.

Most of the structure of the automobile is formed of iron-based materials, in particular steel sheets, and the reduction in the weight of the steel sheet is important to the weight reduction of the car body. However, as described above, simply reducing the weight of the steel sheet is not permitted, and ensuring the mechanical strength of the steel sheet is required at the same time. Such a demand on the steel sheet is placed not only in the automobile manufacturing industry but also in various manufacturing industries similarly. Hence, research and development are being made to enhance the mechanical strength of the steel sheet and thereby obtain a steel sheet in which the mechanical strength can be maintained or improved even when the wall thickness is made smaller than those of conventionally used steel sheets.

In general, a material having high mechanical strength tends to decrease in shape fixability in molding such as bending, and is difficult to mold into a complicated shape. As a means for solving such a problem with moldability, what is called "the hot pressing method (also called the hot stamping method or the die quenching method)" is given. In the hot pressing method, a material to be molded is once heated to high temperature, the steel sheet softened by heating is pressed to be molded, and then cooling is performed. By the hot pressing method, the material of the object can be easily pressed because the material is once heated to high temperature and softened. Furthermore, the mechanical strength of the material can be enhanced by the quenching effect by the cooling after molding. Thus, a molded product in which both good shape fixability and high mechanical strength are achieved can be obtained by the hot pressing method.

However, when the hot pressing method is used for a steel sheet, the surface of the steel sheet is oxidized by the steel sheet being heated to a high temperature of 800°C or more, and scales (compounds) are produced. Hence, the process of removing the scales (what is called a descaling process) is needed after hot pressing is performed, and productivity is reduced. In addition, in a member etc. requiring corrosion resistance, it is necessary to perform anti-rust treatment or metal covering on the surface of the member after processing, and a surface cleaning process and a surface treatment process are needed; consequently, productivity is further reduced.

As a method to suppress such a reduction in productivity, for example, a method in which a steel sheet to be hot pressed is provided with a covering in advance is given. Various materials such as organic-based materials and inorganic-based materials are generally used as the covering on the steel sheet. Among these, plated steel sheets based on zinc (Zn), which has a sacrificial anti-corrosion action on the steel sheet, are widely used as automotive steel sheets etc. from the viewpoints of the anti-corrosion capacity and the steel sheet production technique.

By providing a Zn-based metal covering, the production of scales on the surface of the steel sheet can be prevented, and processes such as descaling become unnecessary; thus, the productivity of molded products is improved. In addition, the Zn-based metal covering has also an anti-rust effect, and therefore also corrosion resistance is improved. Patent Literature 1 to Patent Literature 4 below disclose a method of hot pressing a plated steel sheet that is obtained by providing a Zn-based metal covering to a steel sheet having a prescribed component composition.

In Patent Literature 1 to Patent Literature 3 below, a Zn-hot-dipped steel sheet or an alloyed Zn-hot-dipped steel sheet is used as a steel sheet for hot pressing. By using a Zn-hot-dipped steel sheet or an alloyed Zn-hot-dipped steel sheet for hot pressing, a structure member can be molded without iron oxides (that is, scales) being formed on the surface. Further, in view of the fact that, when a Zn oxide layer is formed thick on the surface of a heat-treated steel material obtained by hot pressing a Zn-based plated steel sheet, the coating adhesiveness and the post-coating corrosion resistance of the heat-treated steel material are adversely affected, Patent Literature 4 below discloses an invention in which a heat-treated steel material is subjected to shot blasting to remove a Zn oxide layer or is subjected to coating after the thickness of a Zn oxide layer is reduced.

Patent Literature 5 and Patent Literature 6 below disclose an invention that improves the coating adhesiveness and the post-coating corrosion resistance of a heat-treated steel material obtained by hot pressing a Zn-based plated steel sheet. Patent Literature 5 below discloses an invention in which a Zn-hot-dipped steel sheet with its surface covered with a silicone resin coating film is used as a steel sheet for hot pressing, and Patent Literature 6 below discloses an invention in which a Zn-hot-dipped steel sheet covered with a barrier layer containing phosphorus (P) and silicon (Si) (a phosphate is given as an example of P, and colloidal silica is given as an example of Si) is used as a steel sheet for hot pressing.

Patent Literature 7 below discloses a technology in which elements that are easier to oxidize than Zn (easily oxidizable elements) are added into a Zn plating layer and an oxide layer of these easily oxidizable elements is formed on the outer layer of the Zn plating layer during the temperature increase in hot pressing, and thereby the volatilization of zinc is prevented.

According to the inventions disclosed by Patent Literature 5 to Patent Literature 7 below, since a Zn plating layer is covered with the barrier layer described above, the vaporization of Zn is suppressed, and thus the adhesiveness of an intermediate coating film and an over-coating film and post-coating corrosion resistance are good.

Patent Literature 8 below mentions that, when a material in which a coating film containing ZnO is applied to the upper layer of an Al plating layer is used for hot pressing, temperature increase characteristics, lubricity, and coating adhesiveness are improved.

Patent Literature 9 describes a zinc-plated metallic material comprising a metallic material, a plating layer consisting of zinc or zinc alloy containing 70% by weight or more of zinc, a coating layer on the plating layer comprising at least one of magnesium oxide or hydrated magnesium oxide in an amount of from 10 to 500 mg per square meter of the coating layer and also at least one of chromium oxide or chromium hydrated oxide in an amount of from 10 to 500 mg of chromium per square meter of said coating layer.

Patent Literature 10 describes a Zn- or part-Zn-plated steel sheet having formed thereon an MgO coating having a weight of about 0.1 to 10.0 $g/m^2$ adhered on a surface thereof.

Patent Literature 11 describes an organic composite galvanized steel sheet formed by sequentially depositing on at least one surface of a steel sheet a galvanization layer, a zinc phosphate layer in an amount of 0.3 $g/m^2$ or more, and an organic layer in an amount of 0.3 to 2 $g/m^2$, wherein the zinc phosphate layer contains Mg so that a value of Mg/P (weight ratio) in the zinc phosphate layer is 0.15 or larger and an amount of Mg contained in the zinc phosphate layer is 20 $mg/m^2$ or more.

Patent Literature 12 describes a surface-treated steel sheet, wherein a magnesium plating layer and a zinc plating layer are formed on the steel sheet in a multilayer, an outermost layer is the zinc plating layer of at least 2 $g/m^2$ or more, and an entire plating layer is 5 $g/m^2$ or more.

Patent Literature 13 describes a surface treated steel sheet comprising a surface of the galvanized steel sheet having a zinc phosphate based coating containing Mg, and a coating containing orthophosphoric acid ester compound on a surface of the zinc phosphate-based coating.

Citation List

Patent Literature

    Patent Literature 1: JP 2003-73774A
    Patent Literature 2: JP 2003-129209A
    Patent Literature 3: JP 2003-126921A
    Patent Literature 4: JP 2004-323897 A
    Patent Literature 5: JP 2007-63578A
    Patent Literature 6: JP 2007-291508A
    Patent Literature 7: JP 2004-270029A
    Patent Literature 8: JP 2011-129084A
    Patent Literature 9: US 5 283 131 A
    Patent Literature 10: EP 0 508 479 A2
    Patent Literature 11: EP 1 253 218 A1
    Patent Literature 12: KR 2003 0053830 A
    Patent Literature 13: JP 2001 152355 A

Summary of Invention

Technical Problem

However, when a Zn-based plated steel sheet, in particular a Zn-hot-dipped steel sheet or an alloyed Zn-hot-dipped steel sheet, is hot pressed, there is a case where a phosphate coating film formed by phosphate treatment adheres less easily (that is, phosphate treatability is low). The Zn-based hot dipping dealt with by the present invention contains Al in a plating bath and a plating layer even in cases other than Zn-Al-based alloy plating containing aluminum (Al) as a main component. The reason is as follows. That is, the temperature of the plating bath is approximately 440 to 480°C; in this temperature range, when Zn and Fe come into contact, Fe and Zn are continuously alloyed, and consequently dross occurs. By putting Al in the plating bath, the reaction between Fe and Al occurs before the reaction between Fe and Zn occurs, and consequently the occurrence of dross is suppressed. For this reason, usually Al is contained in a Zn hot dipping bath.

In general, in Zn hot dipping, Al is contained at 0.2 to 0.3% in the plating bath, and 0.2 to 1.0 mass% of Al is contained in the plating layer; in alloyed Zn hot dipping, Al is contained at 0.1 to 0.2% in the plating bath, and 0.1 to 0.5 mass% of Al is contained in the plating layer.

The Al in the plating layer diffuses and moves to the outer layer of the plating layer not only during the formation of a plating coating film but also during the heating of hot pressing, and forms an Al oxide film. Since the Al oxide film does not dissolve in phosphoric acid, the reaction between Zn and a phosphate (zinc phosphate etc.) is inhibited, and a phosphate coating film is less likely to be formed in the area where the Al oxide film is formed. Consequently, phosphate treatability is low in the area where the Al oxide film is formed. In particular, phosphate treatability is significantly reduced in the case where, in the hot pressing process, the steel sheet is rapidly heated to the $Ac_3$ point or more by energization heating or induction heating and then press molding is quickly performed. In this case, also coating adhesiveness is reduced.

Examples of the Zn-based plated steel sheet include, as well as the zinc hot dipping mentioned above, electroplating, vapor deposition plating, etc. Examples of the plating of the plated steel sheet produced by such a method include zinc electroplating, zinc nickel electroplating, zinc cobalt electroplating, and the like, and include plating not containing Al. These have no concern of reduction in phosphate treatability caused by an Al oxide film, but may have poor coating adhesion depending on the amount of plating attached, heating conditions, etc.; thus, an improvement in coating adhesiveness after hot pressing is desired like in Zn-hot-dipping-based materials.

In addition, when the present inventors conducted a check experiment on a heat-treated steel material disclosed by Patent Literature 5 above that was obtained by using, as a steel sheet for hot pressing, a Zn-hot-dipped steel sheet with its surface covered with a silicone resin coating film, it has been found that, although post-coating corrosion resistance in a cycle corrosion test in which a dry and a wet environment are repeated is good, coating adhesiveness is not always good. Hence, a heat-treated steel material obtained by the invention disclosed in Patent Literature 5 above is not suitable for use as it is for a part or a member in which water is likely to collect because of the structure (for example, a bag-like structural part below the door, a member with a closed cross section in the engine compartment, etc.), for example.

On the other hand, the addition of easily oxidizable elements into a zinc plating layer disclosed in Patent Literature 7 above requires new operational actions, such as the temperature control of the plating bath and dross measures.

Phosphoric acid treatability after hot pressing can be improved by the stacking of a ZnO-containing coating film on a plating layer disclosed in Patent Literature 8 above. In the case where the underlying layer is Al-based plating, the ZnO in the coating film may react with the plating layer by heating and adhesiveness may be maintained. However, in the case where the underlying layer is Zn-based plating, the reaction between ZnO and Zn cannot be expected, and it is feared that the adhesiveness between the stacked ZnO coating film and the underlying plating will be reduced; consequently, it is presumed that a new action is needed with the composition of the coating film etc. in order to improve the adhesiveness between the oxide coating film and the underlying plating.

Thus, the present invention has been made in view of the issue mentioned above, and an object of the present invention is to provide a method for obtaining a hot-pressed zinc-based plated steel sheet excellent in coating adhesiveness after hot pressing.

Solution to Problem

The main points of the present invention are set in the claims.

(1) Advantageous Effects of Invention

As described above, according to the present invention, it becomes possible to improve the coating adhesiveness to a coating film provided after hot pressing.

Description of Embodiments

Hereinbelow, preferred embodiments of the present invention are described in detail.

<1. Zinc-based plated steel sheet>

A Zn-based plated steel sheet according to an embodiment of the present invention includes a Zn-based plating layer on a ground steel sheet, and further includes a surface treatment layer described in detail below on at least one surface of the Zn-based plating layer. The surface treatment layer contains one or more magnesium compounds. The Zn-based plated steel sheet having such a configuration can be suitably used for the hot pressing method described above; after the hot pressing method is performed, magnesium oxide is formed on the outer layer. The configuration of the Zn-based plated steel sheet will now be described in detail.

(1) Ground steel sheet

The ground steel sheet used for the Zn-based plated steel sheet according to the present embodiment is not particularly limited, and various steel sheets having known characteristics and chemical compositions may be used. The chemical composition of the steel sheet is not particularly limited, but is preferably a chemical composition with which high strength is obtained by quenching. For example, when it is attempted to obtain a heat-treated steel material with a tensile strength of 980 MPa or more, an example of the ground steel sheet is made of steel for quenching having a chemical composition of, in mass%, C: 0.05 to 0.4%, Si: 0.5% or less, Mn: 0.5 to 2.5%, P: 0.03% or less, S: 0.01% or less, sol. Al: 0.1% or less, N: 0.01% or less, B: 0 to 0.005%, Ti: 0 to 0.1%, Cr: 0 to 0.5%, Nb: 0 to 0.1%, Ni: 0 to 1.0%, Mo: 0 to 0.5%, and the balance: Fe and impurities.

When it is attempted to obtain a heat-treated steel material with a relatively low strength in which the strength becomes less than 980 MPa during quenching, the chemical composition of the ground steel sheet may not be in the range described above.

The total amount of Mn and Cr contained is preferably 0.5 to 3.0% from the viewpoint of quenchability during the quenching described above and the viewpoint of forming Mn oxides and Cr oxides contained in a zinc oxide layer after heating. The total amount of Mn and Cr contained is more preferably 0.7 to 2.5%.

When Mn and Cr are contained as the chemical composition of the steel sheet, part of the zinc oxide layer formed on the outer layer after hot pressing becomes composite oxides containing Mn and Cr. Coating adhesiveness after phosphate-based chemical conversion treatment is further improved by these composite oxides containing Mn and Cr being formed. Although details are unknown, it is presumed that, by these composite oxides being formed, the alkali resistance of the phosphate-based chemical conversion treatment coating film formed is improved as compared to zinc oxide, and good coating adhesiveness is exhibited.

In the case where Mn and Cr are contained as the chemical composition of the steel sheet, the total amount of Mn and Cr contained is preferably in the range of, in mass%, not less than 0.5% and not more than 3.0%, and more preferably in the range of, in mass%, not less than 0.7% and not more than 2.5%. When the total amount of Mn and Cr contained is less than 0.5%, zinc oxide that is formed on the outer layer after hot pressing and composite oxides that contain Mn and Cr are insufficient, and it may be difficult to bring out better coating adhesiveness. On the other hand, when the total amount of Mn and Cr contained is more than 3.0%, although there is no problem with coating adhesiveness, the cost is increased, and furthermore the toughness of the spot welded portion may be significantly reduced and the wettability of plating may be significantly degraded.

(2) Zn-based plating layer

The Zn-based plating layer according to the present embodiment is not particularly limited, and commonly known Zn-based plating may be used. Specifically, examples of the Zn-based plating layer according to the present embodiment include Zn hot dipping, alloyed Zn hot dipping, Zn-55% Al-1.6% Si hot dipping, Zn-11% Al hot dipping, Zn-11% Al-3% Mg hot dipping, Zn-6% Al-3% Mg hot dipping, Zn-11% Al-3% Mg-0.2% Si hot dipping, Zn electroplating, Zn-Ni electroplating, Zn-Co electroplating, and the like. It is also effective to form a covering of plating of the components mentioned above by a method such as vapor deposition; thus, the method of plating is not particularly limited.

In the present embodiment, as a specific plating operation in the case of using Zn-based hot dipping, an operation in which a steel sheet is dipped in a plating bath in which Zn or a Zn alloy in a molten state is retained and the steel sheet is pulled up from the plating bath is performed. The amount of plating attached to the steel sheet is controlled by adjusting the speed of the pulling-up of the steel sheet, the flow rate and the flow velocity of wiping gas jetted from a wiping nozzle provided above the plating bath, etc. Alloying treatment is performed by, after plating treatment like the above, additionally heating the plated steel sheet using a gas furnace or an induction heating furnace, a heating furnace in which these are combined, or the like. The plating operation may also be performed by the method of continuously plating a coil or the method of plating a cut sheet single body.

In the present embodiment, as a specific plating operation in the case of using electroplating, electrolysis treatment is performed in an electrolyte solution containing Zn ions, using the steel sheet, as a negative electrode, and a counter electrode. The amount of plating attached to the steel sheet is controlled by the composition of the electrolyte solution, the current density, and the electrolysis time.

The thickness of the Zn-based plating layer (that is, the amount of the Zn-based plating layer attached) is preferably in the range of 20 g/m$^2$ to 100 g/m$^2$ per one surface. When the thickness of the Zn-based plating layer is less than 20 g/m$^2$ per one surface, the effective amount of Zn after hot pressing cannot be ensured and corrosion resistance is insufficient; thus, this is not preferable. When the thickness of the Zn-based plating layer is more than 100 g/m$^2$ per one surface, the processability and the adhesiveness of the Zn-based plating layer are reduced; thus, this is not preferable. A more preferred thickness of the Zn-based plating layer is in the range of 30 g/m$^2$ to 90 g/m$^2$ per one surface.

(3) Surface treatment layer

A surface treatment layer containing one or more magnesium (Mg) compounds is further formed on a Zn-based plating layer like the above.

Here, the "magnesium compound" is a compound that, after hot pressing, can be present as magnesium oxide (MgO) on the outer layer of the surface treatment layer. The magnesium compound may be magnesium oxide itself. The magnesium compound may also be a substance in which one or two or more compounds or the like selected from the group consisting of magnesium chloride, magnesium nitrate, and magnesium sulfate, which change to magnesium oxide after hot pressing, are dissolved in a treatment liquid. By magnesium oxide being present on the outer layer of the surface treatment layer after hot pressing, it becomes possible to provide a heat-treated steel material (hot pressed steel material) excellent in durability even in an environment of dipping in salt water.

By magnesium oxide being present on the outer layer of the surface treatment layer after hot pressing, phosphate treatability is improved. As a reason for the improvement in phosphate treatability, it is presumed that the chemical conversion reaction with a phosphate is accelerated by magnesium oxide being dissolved in the phosphate treatment liquid. Furthermore, magnesium oxide formed after hot pressing has also good adhesiveness to the underlying Zn-based plating layer. As a reason for the good adhesiveness to the Zn-based plating layer, it is presumed that, during heating in the hot pressing method, part of the magnesium compound(s) reacts with Zn and Al in the Zn-based plating layer and changes to a composite oxide. It is presumed that, as a result of these, excellent coating adhesiveness is exhibited even in a salt water dipping environment.

The amount of the surface treatment layer attached is not less than 0.2 g/m$^2$ and not more than 5.0 g/m$^2$ per one surface on a magnesium oxide basis both in the case where magnesium oxide is contained and in the case where a treatment liquid containing one or two or more compounds selected from the group consisting of magnesium chloride, magnesium nitrate, and magnesium sulfate is used. When the amount of the surface treatment layer attached is less than 0.2 g/m$^2$ per one surface on a magnesium oxide basis, sufficient magnesium oxide is not present after hot pressing; consequently, the effect of improving phosphate treatability by the dissolving-out of Mg during phosphate treatment is reduced, and coating adhesiveness after hot pressing cannot be ensured sufficiently. On the other hand, when the amount of the surface treatment layer attached is more than 5.0 g/m$^2$ per one surface on a magnesium oxide basis, the cost of the Zn-based plated steel sheet according to the present embodiment is increased, and it is presumed that the cohesive force of the surface treatment layer is weakened and a coating film that is formed on the surface treatment layer after hot pressing is likely to peel off. The amount of the surface treatment layer attached is preferably not less than 0.4 g/m$^2$ and not more than 2.5 g/m$^2$ per one surface on a magnesium oxide basis.

Here, the amount of the magnesium compound(s) contained in the surface treatment layer can be measured by a known method; for example, the fact that the various compounds are magnesium compounds is checked beforehand by cross-sectional energy dispersive X-ray (EDX) analysis or the like, and then the coating film is dissolved; thus, the measurement can be made using inductively coupled plasma (ICP) emission spectrometric analysis or the like.

When forming the surface treatment layer containing magnesium oxide, magnesium oxide in the surface treatment layer is preferably in a particulate form with a particle size (primary particle size) of not less than 5 nm and not more than 100 nm. For the particle size of magnesium oxide, a smaller size is advantageous in terms of post-coating corrosion resistance, but those with a particle size of less than 5 nm are difficult to obtain and are disadvantageous in terms of cost. When the particle size of magnesium oxide is more than 100 nm, the surface area is reduced, and accordingly it is feared that the reactivity with the underlying plating during heating will be reduced; thus, this is not preferable. The particle size of magnesium oxide is preferably not less than 10 nm and not more than 50 nm.

The particle size (primary particle size) of particulate magnesium oxide like the above can be measured by a known method; for example, the measurement can be made by a method in which a cross section-embedded sample is prepared after coating, several particle sizes of magnesium oxide in the coating film are measured, and the average of the obtained measurement results is taken as the particle size.

In the case where magnesium oxide is used to form the surface treatment layer, a treatment liquid in which a powder of magnesium oxide is mixed with a resin and a crosslinker, and water or any of various solvents is used as the solvent is used. On the other hand, in the case where one or two or more compounds selected from the group consisting of magnesium chloride, magnesium nitrate, and magnesium sulfate are used, a treatment liquid in which one or two or more of these magnesium compounds are dissolved in water or any of various solvents, and a resin and a crosslinker are mixed is used.

Examples of the resin include a polyurethane resin, a polyester resin, an epoxy resin, a (meth)acrylic resin, a polyolefin resin, and a phenol resin, modified products of these resins, and the like.

Examples of the crosslinker include a zirconium carbonate compound, an organic titanium compound, an oxazoline polymer, a water-soluble epoxy compound, a water-soluble melamine resin, a water-dispersible blocked isocyanate, a water-based aziridine compound, etc.

Examples of the other component that is preferably further contained in the surface treatment layer according to the present embodiment include one or two or more selected from zirconia, lanthanum oxide, cerium oxide, and neodymium oxide.

When zirconia, lanthanum oxide, cerium oxide, or neodymium oxide mentioned above is contained in the surface treatment layer, during heating, zirconia, lanthanum oxide, cerium oxide, or neodymium oxide in the surface treatment layer makes harmless an Al oxide that is present before hot pressing and is formed during hot pressing. Thereby, the formation of zinc oxide during hot pressing is accelerated; thus, phosphate treatability after hot pressing is enhanced, and coating adhesiveness is improved. Although details of the fact that an Al oxide is made harmless during heating by zirconia, lanthanum oxide, cerium oxide, or neodymium oxide are unknown, it is presumed that zirconia, lanthanum oxide, cerium oxide, or neodymium oxide dissolves an Al oxide formed on the surface of the steel sheet, thereby Zn, which is relatively easy to oxide after Al, is oxidized during hot pressing, and consequently the production of zinc oxide (ZnO), which is excellent in chemical convertibility, is accelerated. To obtain this effect more efficiently, the particle size of the oxide mentioned above is preferably not less than 5 nm and not more than 500 nm.

The amount of the one or two or more selected from zirconia, lanthanum oxide, cerium oxide, and neodymium oxide contained in the surface treatment layer is preferably in the range of not less than 0.2 g/m$^2$ and not more than 2 g/m$^2$ per one surface. When the amount of the one or two or more selected from zirconia, lanthanum oxide, cerium oxide, and neodymium oxide contained in the surface treatment layer is less than 0.2 g/m$^2$ per one surface, sufficient zirconia, lanthanum oxide, cerium oxide, and neodymium oxide are not present after hot pressing; consequently, the effect of making harmless an Al oxide of the plated surface is reduced, and it may be difficult to sufficiently ensure coating adhesiveness after hot pressing. On the other hand, when the amount of zirconia etc. contained in the surface treatment layer is more than 2 g/m$^2$ per one surface, the cost of the Zn-based hot-dipped steel sheet according to the present embodiment is increased, and it is presumed that the cohesive force of the surface treatment layer is weakened and a coating film that is formed on the surface treatment layer after hot pressing is likely to peel off.

The amount of the one or two or more selected from zirconia, lanthanum oxide, cerium oxide, and neodymium oxide contained in the surface treatment layer is preferably not less than 0.4 g/m$^2$ and not more than 1.5 g/m$^2$ per one surface.

Typical examples of the treatment liquid containing zirconia, lanthanum oxide, cerium oxide, and neodymium oxide include a zirconia sol, a lanthanum oxide sol, a cerium oxide sol, and a neodymium oxide sol, and specific examples of the commercially available product include NanoUse (registered trademark) series produced by Nissan Chemical Industries, Ltd. and Seramesu series produced by Taki Chemical Co., Ltd.

Examples of the other component that is preferably further contained in the surface treatment layer according to the present embodiment include one or two or more selected from titanium oxide, nickel oxide, and tin(IV) oxide.

When the one or two or more selected from titanium oxide, nickel oxide, and tin(IV) oxide mentioned above are contained in the surface treatment layer, these oxides are present on the surface of the steel sheet after hot pressing; thereby, some influence is given to the cohesion deposition of an electrodeposition coating film during electrodeposition coating, and the oxides and the electrodeposition coating film adhere strongly; thus, strong adhesiveness can be exhibited even when chemical conversion treatment (phosphate treatment or FF chemical conversion treatment) is not sufficient. To obtain this effect more efficiently, the particle size of the oxide mentioned above is preferably not less than 2 nm and not more than 100 nm.

In addition, among these oxides, titanium oxide not only has the feature mentioned above but also can suppress excessive oxidation and vaporization of Zn during hot pressing, and can enhance not only coating adhesiveness after hot pressing but also corrosion resistance after hot pressing. It is surmised that titanium oxide usually exists in a state of a metal oxide stably, but reacts with zinc oxide formed during heating in hot pressing and forms a composite oxide with zinc oxide, and thereby suppresses excessive oxidation and vaporization of Zn. To obtain this effect more efficiently, the particle size of titanium oxide mentioned above is preferably not less than 2 nm and not more than 100 nm.

The particle size of the one or two or more selected from titanium oxide, nickel oxide, and tin(IV) oxide mentioned above is more preferably not less than 5 nm and not more than 50 nm.

In the case where the surface treatment layer contains titanium oxide, nickel oxide, and tin(IV) oxide, these are contained preferably in the range of not less than 0.2 g/m$^2$ and not more than 2 g/m$^2$ per one surface, and more preferably in the range of not less than 0.4 g/m$^2$ and not more than 1.5 g/m$^2$ per one surface. When the amount of titanium oxide, nickel oxide, and tin(IV) oxide contained is less than 0.2 g/m$^2$ per one surface, these oxides are not present sufficiently after hot pressing, and consequently it may be difficult to bring out still better adhesiveness to the electrodeposition coating film.

On the other hand, when the amount of titanium oxide, nickel oxide, and tin(IV) oxide contained is more than 2 g/m$^2$ per one surface, the cost of the Zn-based plated steel sheet according to the present embodiment is increased, and it is presumed that the cohesive force of the surface treatment layer is weakened and a coating film that is formed on the surface treatment layer after hot pressing is likely to peel off.

In addition to the above, when the amount of titanium oxide contained is less than 0.2 g/m$^2$ per one surface, a sufficient amount of a composite oxide with zinc oxide cannot be formed, and it may be difficult to efficiently suppress the oxidation and vaporization of Zn.

The surface treatment layer according to the present embodiment may contain, in addition to oxides like the above, at least one of one or more P-containing compounds, one or more V-containing compounds, one or more Cu-containing compounds, one or more Al-containing compounds, one or more Si-containing compounds, and one or more Cr-containing compounds described in detail below in the range of a prescribed content.

The P-containing compound is a compound containing phosphorus as a constituent element. Examples of the P-containing compound include compounds such as phosphoric acid, phosphorous acid, phosphonic acid, phosphonous acid, phosphinic acid, phosphinous acid, a phosphine oxide, and phosphine, an ionic compound containing any of these compounds as an anion, and the like. All these P-containing compounds are commercially available as reagents or products, and can be easily obtained. These P-containing compounds exist in a state of being dissolved in a treatment liquid or in a state of being dispersed as powder in a treatment liquid, and exist, in the surface treatment layer, in a state of being dispersed as solid.

The V-containing compound is a compound containing vanadium as a constituent element. Examples of the V-containing compound include vanadium oxides such as vanadium pentoxide, metavanadic acid-based compounds such as ammonium metavanadate, vanadium compounds such as sodium vanadate, other V-containing compounds, and the like. All these V-containing compounds are commercially available as reagents or products, and can be easily obtained. These V-containing compounds exist in a state of being dissolved in a treatment liquid or in a state of being dispersed as powder in a treatment liquid, and exist, in the surface treatment layer, in a state of being dispersed as solid.

The surface treatment layer according to the present embodiment preferably contains one or two or more compounds selected from one or more P-containing compounds and one or more V-containing compounds like the above individually in the range of not less than 0.0 g/m$^2$ and not more than 0.01 g/m$^2$ per one surface on a P and V basis.

One or two or more compounds selected from one or more P-containing compounds and one or more V-containing compounds like the above are oxidized into an oxide during hot pressing, and the oxide exists locally at the interface between the Zn-based plating layer and the surface treatment layer and forms an oxide layer that contains at least one of P and V and has weak cohesive force. Since the amount of the one or two or more compounds selected from one or more P-containing compounds and one or more V-containing compounds contained is individually in the range of not less than 0.0 g/m$^2$ and not more than 0.01 g/m$^2$ per one surface on a P and V basis, the thickness of an oxide layer like the above that is formed during hot pressing and has weak cohesive force is reduced, and the adhesiveness between the Zn-based plating layer and the surface treatment layer after hot pressing is further improved.

When the amount of the one or two or more selected from one or more P-containing compounds and one or more V-containing compounds contained in the surface treatment layer is more than 0.01 g/m$^2$ per one surface, the thickness of the oxide layer that is formed during hot pressing and has weak cohesive force is increased; consequently, the adhesiveness between the Zn-based plating layer and the surface treatment layer is reduced, and as a result also adhesiveness after electrodeposition coating is reduced. From the viewpoint of the adhesiveness between the Zn-based plating layer and the surface treatment layer after hot pressing, the amount of the one or two or more compounds selected from one or more P-containing compounds and one or more V-containing compounds contained in the surface treatment layer is more preferably individually not less than 0.0 g/m$^2$ and not more than 0.003 g/m$^2$ per one surface on a P and V basis.

The Al-containing compound is a compound containing aluminum as a constituent element. Examples of the Al-containing compound include metal Al, aluminum oxide, aluminum hydroxide, an ionic compound containing an aluminum ion as a cation, and the like. All these Al-containing compounds are commercially available as reagents or products, and can be easily obtained. These Al-containing compounds exist in a state of being dissolved in a treatment liquid or in a state of being dispersed as powder in a treatment liquid, and exist, in the surface treatment layer, in a state of being dispersed as solid.

The Si-containing compound is a compound containing silicon as a constituent element. Examples of the Si-containing compound include Si simple substance, silica (silicon oxide), organic silane, a silicone resin used also as a binder resin, and other Si-containing compounds. All these Si-containing compounds are commercially available as reagents or products, and can be easily obtained. These Si-containing compounds exist in a state of being dissolved in a treatment liquid or in a state of being dispersed as powder in a treatment liquid, and exist, in the surface treatment layer, in a state of being dispersed as solid.

The surface treatment layer according to the present embodiment preferably contains one or two or more compounds selected from one or more Al-containing compounds and one or more Si-containing compounds like the above individually in the range of not less than 0.0 g/m$^2$ and not more than 0.005 g/m$^2$ per one surface on an Al and Si basis.

One or two or more compounds selected from one or more Al-containing compounds and one or more Si-containing compounds like the above are oxidized into an oxide during hot pressing, and the oxide concentrates on the surface of the surface treatment layer. Since the amount of the one or two or more compounds selected from one or more Al-containing compounds and one or more Si-containing compounds contained is individually in the range of not less than 0.0 g/m$^2$ and not more than 0.005 g/m$^2$ per one surface on an Al and Si basis, the existence ratio of the oxides containing Al or Si that are formed on the surface of the surface treatment layer during hot pressing is reduced, and the adhesiveness between the surface treatment layer and the electrodeposition coating film after hot pressing is further improved.

When the amount of the one or two or more selected from one or more Al-containing compounds and one or more Si-containing compounds contained in the surface treatment layer is more than 0.005 g/m$^2$ per one surface, the existence ratio of the oxides containing Al or Si that are formed during hot pressing is increased. These oxides containing Al or Si inhibit the formation of a chemical conversion treatment coating film, and reduce the adhesiveness between the surface treatment layer and the electrodeposition coating film after hot pressing; therefore, when the existence ratio of the oxides containing Al or Si that are formed during hot pressing is increased, the adhesiveness between the surface treatment layer and the electrodeposition coating film is reduced. From the viewpoint of the adhesiveness between the surface treatment layer and the electrodeposition coating film after hot pressing (that is, post-coating adhesiveness), the amount of the one or two or more compounds selected from one or more Al-containing compounds and one or more Si-containing compounds contained in the surface treatment layer is more preferably individually not less than 0.0 g/m$^2$ and not more than 0.002 g/m$^2$ per one surface on an Al and Si basis.

The Cr-containing compound is a compound containing chromium as a constituent element. Examples of the Cr-containing compound include metal Cr, chromium compounds having various valences, an ionic compound containing a chromium ion having any of various valences as a cation, and the like. These Cr-containing compounds exist in a state of being dissolved in a treatment liquid or in a state of being dispersed as powder in a treatment liquid, and exist, in the surface treatment layer, in a state of being dispersed as solid.

The Cr-containing compound varies in performance and properties in accordance with the valence, and many hexavalent chromium compounds are harmful. In view of the current tendency of attention to environmental protection being strongly required, the surface treatment layer according to the present embodiment preferably contains as little amount of Cr-containing compounds like the above as possible, and is more preferably chromium-free.

From the above point of view, the surface treatment layer according to the present embodiment preferably contains one or two or more compounds selected from one or more Cr-containing compounds like the above in the range of not less than 0.0 g/m$^2$ and not more than 0.01 g/m$^2$ per one surface on a Cr basis, and more preferably contains no Cr-containing compound.

The surface treatment layer may contain pigments such as carbon black and titania, various anti-rust pigments used for coated steel sheets, and the like as long as the effect of the present invention based on containing a magnesium compound is not inhibited.

As the method for forming the surface treatment layer, a treatment liquid containing a magnesium compound may be applied to the surface of a zinc-plated steel sheet, and drying and baking may be performed.

The coating method is not limited to a specific method, and examples include a method in which a ground steel sheet is dipped in a treatment liquid or a treatment liquid is sprayed to the surface of a ground steel sheet, and then the attached amount is controlled by a roll or gas spraying so as to obtain a prescribed attached amount, and a method of coating using a roll coater or a bar coater.

The method of drying and baking is not limited to a specific method, either, as long as it is a method that can volatilize a dispersion medium (mainly water). Here, if heating is performed at an excessively high temperature, it is feared that the uniformity of the surface treatment layer will be reduced; conversely, if heating is performed at an excessively low temperature, it is feared that productivity will be reduced. Thus, to produce a surface treatment layer having excellent characteristics stably and efficiently, the surface treatment layer after coating is preferably heated at a temperature of approximately 80°C to 150°C for approximately 5 seconds to 20 seconds.

The formation of the surface treatment layer is preferably performed in-line in the production line of the plated steel sheet because this is economical; but the surface treatment layer may be formed also in another line, or may be formed after blanking for molding is performed.

Here, the amount of the contained various oxides mentioned above that are preferably contained in the surface treatment layer can be measured by a known method; for example, the fact that the various compounds are the oxides of attention is checked beforehand by cross-sectional energy dispersive X-ray (EDX) analysis or the like, and then the coating film is dissolved; thus, the measurement can be made using inductively coupled plasma (ICP) emission spectrometric analysis or the like. Also the amount of the above-mentioned one or more P-containing compounds, V-containing compounds, Cu-containing compounds, Al-containing compounds, Si-containing compounds, and Cr-containing compounds contained in the surface treatment layer can be measured by a similar method.

<2. With regard to hot pressing process>

In the case where the hot pressing method is used for a Zn-based plated steel sheet like that described above, the Zn-based plated steel sheet is heated to a prescribed temperature, and is then press-molded. In the case of the Zn-based plated steel sheet according to the present embodiment, heating is performed to 700 to 1000°C because hot press molding is performed.

Examples of the hot pressing method include two methods of hot pressing by slow heating and hot pressing by rapid heating. Examples of the heating method used include heating with an electric furnace or a gas furnace, flame heating, energization heating, high-frequency heating, induction heating, etc., and the atmosphere during heating is not particularly limited; as a heating method to obtain the effect of the present invention significantly, energization heating, induction heating, and the like, which are rapid heating, are preferably used.

In the hot pressing method by slow heating, the radiation heating of a heating furnace is used. First, the Zn-based plated steel sheet according to the present embodiment that is used as a steel sheet for hot pressing is placed in a heating furnace (a gas furnace, an electric furnace, etc.). The steel sheet for hot pressing is heated at 700 to 1000°C in the heating furnace, and is, depending on the condition, kept at this heating temperature (soaking). Thereby, Zn in the Zn-based plating layer is combined with Fe and forms a solid phase (an Fe-Zn solid solution phase). After the molten Zn in the Zn-based plating layer is combined with Fe and forms a solid phase, the steel sheet is taken out of the heating furnace. Alternatively, by combining Zn in the Zn-based plating layer with Fe by soaking, the solid phase may be formed as an Fe-Zn solid solution phase and a ZnFe alloy phase; and then the steel sheet may be taken out of the heating furnace.

Alternatively, the Zn-based plated steel sheet may be heated to 700 to 1000°C while no keeping time is provided or the keeping time is set to a short time, and the steel sheet may be taken out of the heating furnace. In this case, after the steel sheet is heated to 700 to 1000°C, cooling is performed without applying stress to the steel sheet by press molding or the like until Zn in the Zn-based plating layer is combined with Fe and forms a solid phase (an Fe-Zn solid solution phase or a ZnFe alloy phase). Specifically, cooling is performed until at least the temperature of the steel sheet becomes 782°C or less. After the cooling, as described below, cooling is performed while the steel sheet is pressed using a mold.

Also in hot pressing by rapid heating, similarly, the Zn-based plated steel sheet according to the present embodiment that is used as a steel sheet for hot pressing is rapidly heated to 700 to 1000°C. The rapid heating is performed by, for example, energization heating or induction heating. The average heating rate in this case is 20°C/second or more. In the case of rapid heating, after the Zn-based plated steel sheet is heated to 700 to 1000°C, cooling is performed without applying stress to the steel sheet by press molding or the like until Zn in the Zn-based plating layer is combined with Fe and forms a solid phase (an Fe-Zn solid solution phase or a ZnFe alloy phase). Specifically, cooling is performed until at least the temperature of the steel sheet becomes 782°C or less. After the cooling, as described below, cooling is performed while the steel sheet is pressed using a mold.

The taken-out steel sheet is pressed using a mold. When pressing the steel sheet, the steel sheet is cooled by the mold. A cooling medium (e.g., water etc.) is circulated through the mold, and the mold removes heat from the steel sheet and cools it. By the above process, a hot pressed steel material is produced by normal heating.

The hot pressed steel material produced using the Zn-based plated steel sheet including the surface treatment layer according to the present embodiment has excellent phosphate treatability and coating adhesiveness. In particular, the Zn-based plated steel sheet according to the present embodiment exhibits the effect significantly in the case where heating is performed at 700 to 1000°C by hot pressing by rapid heating or hot pressing by slow heating while no keeping time is provided or the keeping time is set to a short time.

In the case where hot pressing by normal heating is performed using a conventional plated steel sheet, the steel sheet is soaked in a heating furnace. In this case, although an Al oxide film is formed on the outer layer of the plating layer of the steel sheet for hot pressing, the Al oxide film is broken and divided to some degree due to long time soaking, and therefore the adverse effect on chemical conversion treatability is small. On the other hand, in the case where hot pressing by rapid heating is performed, the soaking time is very short. Hence, the Al oxide film formed on the outermost surface is less likely to be broken. Thus, in hot pressing by rapid heating in the case where a conventional plated steel sheet is used, the phosphate treatability and the coating adhesiveness of the hot pressed steel material are low as compared to hot pressing by normal heating.

On the other hand, the Zn-based plated steel sheet for hot pressing according to the present embodiment contains one or more magnesium compounds in the surface treatment layer, and thereby makes the Al oxidization harmless and accelerates the production of zinc oxide during hot pressing; and can thus exhibit good phosphate treatability and coating adhesiveness.

The action and effect of the Zn-based plated steel sheet according to an embodiment of the present invention will now be described still more specifically with reference to Examples. Examples shown below are only examples of the Zn-based plated steel sheet according to the present invention, and the Zn-based plated steel sheet according to the present invention is not limited to Examples below.

<Ground steel sheet>

In the following, first, pieces of molten steel having the chemical compositions shown in Table 1 below were produced. After that, the produced pieces of molten steel were used to produce slabs by the continuous casting method. The obtained slab was hot rolled to produce a hot rolled steel sheet. Subsequently, the hot rolled steel sheet was pickled, and then cold rolling was performed to produce a cold rolled steel sheet; thus, steel sheets of steel #1 to #8 having the chemical compositions described in Table 1 were prepared. As shown in Table 1, the sheet thicknesses of the steel sheets of all the steel types were 1.6 mm.

[Table 1]

Table 1

| Steel type | Sheet thickness (mm) | Chemical composition (unit: mass%; the balance: Fe and impurities) | | | | | | | | | | | | |
|---|---|---|---|---|---|---|---|---|---|---|---|---|---|---|
| | | C | Si | Mn | P | S | sol. Al | N | B | Ti | Cr | Mo | Nb | Ni |
| #1 | 1.6 | 0.2 | 0.2 | 1.3 | 0.01 | 0. 005 | 0. 02 | 0.002 | 0.002 | 0.02 | 0.2 | - | - | - |
| #2 | 1.6 | 0.2 | 0.5 | 1.3 | 0.01 | 0. 005 | 0.02 | 0. 002 | 0. 002 | 0.02 | 0.2 | - | - | - |
| #3 | 1.6 | 0.2 | 0.5 | 1.3 | 0.01 | 0. 005 | 0. 02 | 0. 002 | 0.002 | 0.02 | 0.2 | - | 0.05 | - |
| #4 | 1.6 | 0.2 | 0.5 | 1.3 | 0.01 | 0. 005 | 0.02 | 0.002 | 0.002 | 0. 02 | 0.2 | - | - | 1 |
| #5 | 1.6 | 0.2 | 0.5 | 1.3 | 0.01 | 0. 005 | 0.02 | 0.002 | 0.002 | 0. 02 | 0.2 | 0.5 | - | - |
| #6 | 1.6 | 0.2 | 0.5 | 1.3 | 0.01 | 0. 005 | 0.02 | 0.002 | - | - | - | - | - | - |
| #7 | 1.6 | 0.2 | 0.2 | 0.2 | 0.01 | 0. 005 | 0.02 | 0.002 | 0. 002 | 0. 02 | 0.2 | - | - | - |
| #8 | 1.6 | 0.2 | 0.2 | 0.4 | 0.01 | 0. 005 | 0.02 | 0.002 | 0. 002 | 0. 02 | 0.2 | - | - | - |

<Zn-based plating layer>

The steel sheets of steel #1 to #8 were subjected to Zn hot dipping treatment, and were then subjected to alloying treatment. With the maximum temperature in each alloying treatment set to 530°C, heating was performed for approximately 30 seconds; and then cooling was performed to room temperature; thus, an alloyed Zn-hot-dipped steel sheet (GA) was produced. Using steel #1, Zn hot dipping treatment was performed, and a Zn-hot-dipped steel sheet (GI) was produced without performing alloying treatment.

Further, steel #1 was subjected to various types of Zn hot dipping using three types of plating baths of Zn-55% Al-1.6% Si hot dipping, Zn-6% Al-3% Mg hot dipping, and Zn-11% Al-3% Mg-0.2% Si plating, and Zn-based hot-dipped steel sheets A1 to A3 were produced.

A1: Zn-55% Al-1.6% Si hot dipping
A2: Zn-6% Al-3% Mg hot dipping
A3: Zn-11% Al-3% Mg-0.2% Si plating

In addition, steel #1 was subjected to various types of Zn-based plating of Zn electroplating, Zn-Ni electroplating, and Zn-Co electroplating.

A4: Zn electroplating
A5: Zn-Ni electroplating
A6: Zn-Co electroplating

In the eight types of Zn-based plating processes mentioned above, the amount of the Zn-based plating layer attached was set to 60 g/m$^2$ equally.

The A1 concentration in the plating coating film of the Zn-based plated steel sheet described above was found by the following method. That is, a sample was collected from each Zn-based plated steel sheet. The Zn-based plating layer of the collected sample was dissolved in a 10% HCl aqueous solution, and the composition of the Zn-based plating layer was analyzed by ICP emission spectrometric analysis. The Al concentration (mass%) was found on the basis of the obtained analysis result. The obtained results are collectively shown in Table 3 and Table 4 below.

<Surface treatment layer>

Subsequently, in order to form coating films of the compositions and the attached amounts shown in Table 2, compounds and chemical agents were blended using water so as to obtain solid content concentrations close to those of Table 2. The obtained treatment liquid was applied with a bar coater, and drying was performed using an oven under conditions for keeping a maximum peak temperature of 100°C for 8 seconds; thus, a plated steel sheet for hot pressing was produced. The amount of the treatment liquid attached was adjusted by the dilution of the liquid and the count of the bar coater so that the amounts of attached Mg compounds and magnesium oxide in the treatment liquid might be the numerical values shown in Table 2 on a magnesium oxide basis. In Table 2 below, the solid content concentration of each component is written as the ratio of the nonvolatile content of each component, such as "compound A," to the nonvolatile content of the entire treatment liquid (unit: mass%, the value per one surface).

The components (symbols) in Table 2 are as follows.

As described later, also treatment liquids containing zirconia, lanthanum oxide, cerium oxide, and neodymium oxide were investigated as substances other than magnesium compounds; in this case, these oxides are denoted by "oxide B." Similarly, titanium oxide, nickel oxide, and tin(IV) oxide are denoted by "oxide C."

(Compound A) Mg compounds and magnesium oxide

Mg: magnesium oxide (produced by IoLiTec GmbH), particle size: 35 nm (catalog value)
A-1: magnesium oxide (produced by Nisshin Engineering Inc.), particle size: 8 nm (catalog value)
A-2: magnesium oxide (produced by Aldrich Chemical Co.), particle size: less than 50 nm (catalog value)
A-3: magnesium oxide (produced by Ion-Ceramic Co.,Ltd.), particle size: 100 nm (catalog value)
A-4: magnesium oxide (produced by Tateho Chemical Industries Co.,Ltd.), particle size: 0.5 μm (catalog value)
B: magnesium sulfate heptahydrate (produced by Kanto Chemical Co.,Inc.)
C: magnesium nitrate hexahydrate (produced by Kanto Chemical Co.,Inc.)
D: copper(II) oxide (produced by IoLiTec GmbH), particle size: 40 to 80 nm (catalog value)

AZ: an alumina sol (Aluminasol 200, produced by Nissan Chemical Industries, Ltd.), particle size: approximately 10 nm

In Table 2, the compounds mentioned above are written as "Compound A." For B and C above, these are dissolved in ion-exchanged water and used as a coating material, and therefore the initial particle size presents no problem.

(Oxide B) zirconia, lanthanum oxide, cerium oxide, and neodymium oxide

ZA: a zirconia sol (NanoUse (registered trademark) ZR-30AL, produced by Nissan Chemical Industries, Ltd.), particle size: 70 to 110 nm (catalog value)
La: a lanthanum oxide sol (Bairaru La-C10, produced by Taki Chemical Co., Ltd.), particle size: 40 nm (catalog value)
Ce: a cerium oxide sol (Nidoraru P-10, produced by Taki Chemical Co., Ltd.), particle size: 20 nm (catalog value)
Nd: a neodymium oxide sol (Bairaru Nd-C10, produced by Taki Chemical Co., Ltd.), particle size: 40 nm (catalog value)

(Oxide C) titanium oxide, nickel oxide, and tin(IV) oxide

Ti: titania sol (titania sol TKS-203, produced by Tayca Corporation), particle size: 6 nm (catalog value)
Ni: nickel oxide (nickel oxide, produced by IoLiTec GmbH), particle size: 20 nm
Sn: a tin(IV) oxide sol (Seramesu C-10, produced by Taki Chemical Co., Ltd.), particle size: 10 nm
SP: tin(IV) oxide (tin oxide, produced by IoLiTec GmbH), particle size: 10 to 20 nm

(iii) Resin

A: a urethane-based resin emulsion (Superflex (registered trademark) 150, produced by DKS Co. Ltd.)
B: a urethane-based resin emulsion (Superflex (registered trademark) E-2000, produced by DKS Co. Ltd.)
C: a polyester resin emulsion (Vylonal (registered trademark) MD1480, produced by Toyobo Co., Ltd.)

(iv) Crosslinker

M: a melamine resin (Cymel (registered trademark) 325, produced by Mitsui Cytec Ltd.)
Z: ammonium zirconium carbonate (an ammonium zirconium carbonate solution, produced by Kishida Chemical Co.,Ltd.)
S: a silane coupling agent (Saira-esu S510, produced by Nichibi Trading Co.,LTD.) (a Si-containing compound)

(v) Pigment

CB: carbon black (Mitsubishi (registered trademark) carbon black #1000, produced by Mitsubishi Chemical Corporation)
T: titanium oxide (titanium oxide R-930, produced by Ishihara Sangyo Kaisha, Ltd.), particle size: 250 nm (catalog value)
"T" titanium oxide described herein is a pigment with a particle size of 200 to 400 nm mainly used for a white pigment or the like in a coating material, and cannot achieve performance obtained by oxide B because the particle size is larger than that of (oxide C).
PA: condensed Al phosphate (condensed aluminum phosphate, K-White ZF150W, produced by Tayca Corporation) (a P and Al-containing compound)
PM: magnesium phosphite (NP-1802, produced by Toho Ganryo Co., Ltd.) (a P-containing compound)

Si1: silica particles (Sylomask 02, produced by Fuji Silysia Chemical Ltd.) (a Si-containing compound)
Si2: colloidal silica (Snowtex O, produced by Nissan Chemical Industries, Ltd.) (a Si-containing compound)
Al: an alumina sol (AS-200, produced by Nissan Chemical Industries, Ltd.) (an Al-containing compound)
V: potassium vanadate (a general reagent) (a V-containing compound)
Cr: Cr(VI) oxide (a general reagent) (a Cr-containing compound)
Cu: copper(II) oxide (a general reagent) (a Cu-containing compound)

[Table 2]

Table 2-1

| | Oxide A | | Oxide B | | Oxide C | | Resin | | Crosslinker | | Pigment etc. | | Notes |
|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 1 | Mg | 100 | - | 0 | - | 0 | - | 0 | - | 0 | - | 0 | |
| 2 | Mg | 75 | - | 0 | - | 0 | B | 25 | - | 0 | - | 0 | |
| 3 | Mg | 40 | - | 0 | - | 0 | B | 60 | - | 0 | - | 0 | |
| 4 | Mg | 20 | - | 0 | - | 0 | B | 80 | - | 0 | - | 0 | |
| 5 | Mg | 50 | - | 0 | - | 0 | B | 50 | - | 0 | - | 0 | |
| 6 | Mg | 50 | - | 0 | - | 0 | B | 45 | Z | 5 | - | 0 | |
| 7 | Mg | 50 | - | 0 | - | 0 | B | 45 | S | 5 | - | 0 | |
| 8 | Mg | 50 | - | 0 | - | 0 | B | 45 | - | 0 | CB | 5 | |
| 9 | Mg | 50 | - | 0 | - | 0 | B | 45 | - | 0 | T | 5 | |
| 10 | Mg | 50 | - | 0 | - | 0 | B | 40 | - | 0 | PA | 10 | |
| 11 | Mg | 50 | - | 0 | - | 0 | B | 40 | - | 0 | Si | 10 | |
| 12 | A-1 | 50 | - | 0 | - | 0 | A | 50 | - | 0 | - | 0 | |
| 13 | A-2 | 50 | - | 0 | - | 0 | A | 50 | - | 0 | - | 0 | |
| 14 | A-3 | 50 | - | 0 | - | 0 | A | 50 | - | 0 | - | 0 | |
| 15 | A-4 | 50 | - | 0 | - | 0 | A | 50 | - | 0 | - | 0 | |
| 16 | B | 50 | - | 0 | - | 0 | A | 50 | - | 0 | - | 0 | |
| 17 | C | 50 | - | 0 | - | 0 | B | 50 | - | 0 | - | 0 | |
| 18 | D | 100 | - | 0 | - | 0 | - | 0 | - | 0 | - | 0 | |
| 19 | D | 50 | - | 0 | - | 0 | B | 50 | - | 0 | - | 0 | |
| 20 | Mg:B=1:1 | 50 | - | 0 | - | 0 | A | 50 | - | 0 | - | 0 | |
| 21 | Mg:C=1:1 | 50 | - | 0 | - | 0 | A | 50 | - | 0 | - | 0 | |

| | Oxide A | | Oxide B | | Oxide C | | Resin | | Crosslinker | | Pigment etc. | | Notes |
|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 22 | B:C=1:1 | 50 | - | 0 | - | 0 | A | 50 | - | 0 | - | 0 | |
| 23 | A-1 : B=1:1 | 50 | - | 0 | - | 0 | A | 50 | - | 0 | - | 0 | |
| 24 | A-1 : C=1: 1 | 50 | - | 0 | - | 0 | A | 50 | - | 0 | - | 0 | |
| 25 | A-2: B=1:1 | 50 | - | 0 | - | 0 | A | 50 | - | 0 | - | 0 | |
| 26 | Mg:B:C=1:1:1 | 60 | - | 0 | - | 0 | A | 40 | - | 0 | - | 0 | |
| 27 | A-1:B:C=1:1:1 | 60 | - | 0 | - | 0 | A | 40 | - | 0 | - | 0 | |
| 28 | A-2:B:C=1:1:1 | 60 | - | 0 | - | 0 | A | 40 | - | 0 | - | 0 | |
| 29 | AZ | 100 | - | 0 | - | 0 | - | 0 | - | 0 | - | 0 | |
| 30 | AZ | 50 | - | 0 | - | 0 | B | 50 | - | 0 | - | 0 | |

[Table 3]

[Table 3]

Table 2-2

| | | Oxide A | | Oxide B | | Oxide C | | Resin | | Cross linker | | Pigment etc. | | Notes |
|---|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 31 | - | 0 | - | 0 | - | 0 | A | 100 | - | 0 | - | 0 | |
| 32 | - | 0 | - | 0 | - | 0 | - | 0 | - | 0 | - | 0 | |
| 33 | Mg | 30 | - | 0 | Ti | 20 | B | 35 | S | 5 | PA | 10 | |
| 34 | Mg | 30 | - | 0 | Ti | 20 | B | 35 | S | 5 | Si | 10 | |
| 35 | Mg | 30 | - | 0 | Ti | 20 | B | 35 | Z | 5 | PA | 10 | |
| 36 | Mg | 30 | - | 0 | Ti | 20 | B | 35 | Z | 5 | Si | 10 | |
| 37 | Mg | 35 | - | 0 | Ti | 25 | . B | 40 | - | 0 | - | 0 | |
| 38 | Mg | 35 | - | 0 | Ni | 25 | B | 40 | - | 0 | - | 0 | |
| 39 | Mg | 30 | - | 0 | Ni | 20 | B | 35 | S | 5 | PA | 10 | |
| 40 | Mg | 30 | - | 0 | Ni | 20 | B | 35 | S | 5 | Si | 10 | |
| 41 | Mg | 35 | - | 0 | Sn | 25 | B | 40 | - | 0 | - | 0 | |
| 42 | Mg | 30 | - | 0 | Sn | 20 | B | 35 | S | 5 | PA | 10 | |
| 43 | Mg | 20 | - | 0 | SP | 50 | B | 30 | - | 0 | - | 0 | |
| 44 | Mg | 30 | - | 0 | SP | 20 | B | 35 | S | 5 | PA | 10 | |
| 45 | Mg | 5 | - | 0 | Ti | 5 | B | 90 | - | 0 | - | 0 | |
| 46 | Mg | 30 | - | 0 | Ti | 50 | B | 20 | - | 0 | - | 0 | |
| 47 | Mg | 30 | ZA | 20 | - | 0 | B | 35 | S | 5 | PA | 10 | |
| 48 | Mg | 30 | ZA | 20 | - | 0 | B | 35 | S | 5 | Si | 10 | |
| 49 | Mg | 30 | ZA | 20 | - | 0 | B | 35 | Z | 5 | PA | 10 | |
| 50 | Mg | 30 | ZA | 20 | - | 0 | B | 35 | Z | 5 | Si | 10 | |
| 51 | Mg | 35 | ZA | 25 | - | 0 | B | 40 | - | 0 | - | 0 | |
| 52 | Mg | 35 | La | 25 | - | 0 | B | 40 | - | 0 | - | 0 | |

(continued)

| | Oxide A | | Oxide B | | Oxide C | | Resin | | Cross linker | | Pigment etc. | | Notes |
|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 53 | **Mg** | 30 | La | 20 | - | 0 | B | 35 | Z | 5 | PA | 10 | |
| 54 | **Mg** | 30 | La | 20 | - | 0 | B | 35 | Z | 5 | Si | 10 | |
| 55 | **Mg** | 35 | Ce | 25 | - | 0 | B | 40 | - | 0 | - | 0 | |
| 56 | **Mg** | 35 | Nd | 25 | - | 0 | B | 40 | - | 0 | - | 0 | |
| 57 | **Mg** | 20 | ZA | 50 | - | 0 | B | 30 | - | 0 | - | 0 | |
| 58 | **Mg** | 10 | ZA | 50 | - | 0 | B | 40 | - | 0 | - | 0 | |
| 59 | **Mg** | 5 | ZA | 5 | - | 0 | B | 90 | - | 0 | - | 0 | |
| 60 | **Mg** | 30 | ZA | 50 | - | 0 | B | 20 | - | 0 | - | 0 | |

[Table 4]

[Table 4]

Table 2-3

| | Oxide A | | Oxide B | | Oxide C | | Resin | | Cross linker | | Pigment etc. | | Notes |
|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 61 | **Mg** | 30 | ZA | 20 | Ti | 20 | B | 30 | - | 0 | - | 0 | |
| 62 | **Mg** | 30 | ZA | 20 | Ni | 20 | B | 30 | - | 0 | - | 0 | |
| 63 | **Mg** | 30 | ZA | 20 | Sn | 20 | B | 30 | - | 0 | - | 0 | |
| 64 | **Mg** | 30 | La | 20 | Ti | 20 | B | 30 | - | 0 | - | 0 | |
| 65 | **Mg** | 30 | Ce | 20 | Ti | 20 | B | 30 | - | 0 | - | 0 | |
| 66 | **Mg** | 30 | Nd | 20 | Ti | 20 | B | 30 | - | 0 | - | 0 | |
| 67 | **Mg** | 30 | ZA | 20 | Ti | 20 | B | 20 | S | 5 | PA | 5 | |
| 68 | **Mg** | 30 | ZA | 20 | Ti | 20 | B | 20 | S | 5 | Si | 5 | |
| 69 | **Mg** | 30 | ZA | 20 | Ti | 20 | B | 20 | Z | 5 | PA | 5 | |
| 70 | **Mg** | 30 | ZA | 20 | Ti | 20 | B | 20 | Z | 5 | Si | 5 | |
| 71 | **Mg** | 30 | La | 20 | Ti | 20 | B | 20 | S | 5 | PA | 5 | |
| 72 | **Mg** | 30 | La | 20 | Ti | 20 | B | 20 | S | 5 | Si | 5 | |
| 73 | **Mg** | 30 | La | 20 | Ti | 20 | B | 20 | Z | 5 | PA | 5 | |
| 74 | **Mg** | 30 | La | 20 | Ti | 20 | B | 20 | Z | 5 | Si | 5 | |
| 75 | **Mg** | 30 | ZA | 20 | Ti:Ni=1:1 | 20 | B | 30 | - | 0 | - | 0 | |
| 76 | **Mg** | 30 | La | 20 | Ti:Ni=1:1 | 20 | B | 30 | - | 0 | - | 0 | |
| 77 | **Mg** | 50 | - | 0 | - | 0 | B | 48 | - | 0 | Al | 2 | |
| 78 | **Mg** | 50 | - | 0 | - | 0 | B | 49. 1 | - | 0 | Al | 0.9 | |
| 79 | **Mg** | 50 | - | 0 | - | 0 | B | 49. 7 | - | 0 | Al | 0.3 | |
| 80 | **Mg** | 50 | - | 0 | - | 0 | B | 48 | - | 0 | Si2 | 2 | |

| | Oxide A | | Oxide B | | Oxide C | | Resin | | Cross linker | | Pigment etc. | | Notes |
|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 81 | **Mg** | 50 | - | 0 | - | 0 | B | 49 | - | 0 | Si2 | 1 | |
| 82 | **Mg** | 50 | - | 0 | - | 0 | B | 49.7 | - | 0 | Si2 | 0.3 | |
| 83 | **Mg** | 50 | - | 0 | - | 0 | B | 45 | - | 0 | PZ | 5 | |
| 84 | **Mg** | 50 | - | 0 | - | 0 | B | 48 | - | 0 | PZ | 2 | |
| 85 | **Mg** | 50 | - | 0 | - | 0 | B | 49.5 | - | 0 | PZ | 0.5 | |
| 86 | **Mg** | 50 | - | 0 | - | 0 | B | 46 | - | 0 | V | 4 | |
| 87 | **Mg** | 50 | - | 0 | - | 0 | B | 48 | - | 0 | V | 2 | |
| 88 | **Mg** | 50 | - | 0 | - | 0 | B | 49.5 | - | 0 | V | 0.5 | |
| 89 | **Mg** | 50 | - | 0 | - | 0 | B | 48 | - | 0 | Cr | 2 | |
| 90 | **Mg** | 50 | - | 0 | - | 0 | B | 49. 2 | - | 0 | Cr | 0.8 | |

[Table 5]

[Table 5]

Table 2-4

| | Oxide A | | Oxide B | | Oxide C | | Resin | | Cross linker | | Pigment etc. | | Notes |
|---|---|---|---|---|---|---|---|---|---|---|---|---|---|
| | Type | Concentrat ion (mass%) | Type | Concentra tion (mass%) | Type | Concentra tion (mass%) | Type | Concentra tion (mass%) | Type | Concentra tion (mass%) | Type | Concentra tion (mass%) | |
| 91 | **Mg** | 35 | - | 0 | Ti | 25 | B | 49 | - | 0 | Al | 1 | |
| 92 | **Mg** | 35 | - | 0 | Ti | 25 | B | 49.6 | - | 0 | Al | 0.4 | |
| 93 | **Mg** | 35 | - | 0 | Ti | 25 | B | 49.9 | - | 0 | Al | 0.1 | |
| 94 | **Mg** | 35 | - | 0 | Ti | 25 | B | 49 | - | 0 | Si2 | 1 | |
| 95 | **Mg** | 35 | - | 0 | Ti | 25 | B | 49.5 | - | 0 | Si2 | 0.5 | |
| 96 | **Mg** | 35 | - | 0 | Ti | 25 | B | 49.9 | - | 0 | Si2 | 0.1 | |
| 97 | **Mg** | 35 | - | 0 | Ti | 25 | B | 47 | - | 0 | PZ | 3 | |
| 98 | **Mg** | 35 | - | 0 | Ti | 25 | B | 49 | - | 0 | PZ | 1 | |
| 99 | **Mg** | 35 | - | 0 | Ti | 25 | B | 49.8 | - | 0 | PZ | 0.2 | |
| 100 | **Mg** | 35 | - | 0 | Ti | 25 | B | 48 | - | 0 | V | 2 | |
| 101 | **Mg** | 35 | - | 0 | Ti | 25 | B | 49 | - | 0 | V | 1 | |
| 102 | **Mg** | 35 | - | 0 | Ti | 25 | B | 49.8 | - | 0 | V | 0.2 | |
| 103 | **Mg** | 35 | - | 0 | Ti | 25 | B | 49 | - | 0 | Cr | 1 | |
| 104 | **Mg** | 35 | - | 0 | Ti | 25 | B | 49.6 | - | 0 | Cr | 0.4 | |
| 105 | **Mg** | 35 | ZA | 25 | - | 0 | B | 49.2 | - | 0 | Al | 0.8 | |
| 106 | **Mg** | 35 | ZA | 25 | - | 0 | B | 49.6 | - | 0 | Al | 0.4 | |
| 107 | **Mg** | 35 | ZA | 25 | - | 0 | B | 49.9 | - | 0 | Al | 0.1 | |
| 108 | **Mg** | 35 | ZA | 25 | - | 0 | B | 49.2 | - | 0 | Si2 | 0.8 | |
| 109 | **Mg** | 35 | ZA | 25 | - | 0 | B | 49.6 | - | 0 | Si2 | 0.4 | |
| 110 | **Mg** | 35 | ZA | 25 | - | 0 | B | 49.9 | - | 0 | Si2 | 0.1 | |
| 111 | **Mg** | 35 | ZA | 25 | - | 0 | B | 47 | - | 0 | PZ | 3 | |
| 112 | **Mg** | 35 | ZA | 25 | - | 0 | B | 49 | - | 0 | PZ | 1 | |

EP 3 241 921 B1

(continued)

| | Oxide A | | Oxide B | | Oxide C | | Resin | | Cross linker | | Pigment etc. | | Notes |
|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 113 | Mg | 35 | ZA | 25 | - | 0 | B | 49.6 | - | 0 | PZ | 0.4 | |
| 114 | Mg | 35 | ZA | 25 | - | 0 | B | 48 | - | 0 | V | 2 | |
| 115 | Mg | 35 | ZA | 25 | - | 0 | B | 49 | - | 0 | V | 1 | |
| 116 | Mg | 35 | ZA | 25 | - | 0 | B | 49.7 | - | 0 | V | 0.3 | |
| 117 | Mg | 35 | ZA | 25 | - | 0 | B | 48.5 | - | 0 | Cr | 1.5 | |
| 118 | Mg | 35 | ZA | 25 | - | 0 | B | 49.5 | - | 0 | Cr | 0.5 | |
| 119 | Mg | 30 | ZA | 20 | Ti | 20 | B | 49.3 | - | 0 | Al | 0.7 | |
| 120 | Mg | 30 | ZA | 20 | Ti | 20 | B | 49.7 | - | 0 | Al | 0.3 | |

[Table 6]

[Table 6]

Table 2-5

| | Oxide A | | Oxide B | | Oxide C | | Resin | | Crosslinker | | Pigment etc. | | Notes |
|---|---|---|---|---|---|---|---|---|---|---|---|---|---|
| | Type | Concentration (mass%) | Type | Concentration (mass%) | Type | Concentration (mass%) | Type | Concentration (mass%) | Type | Concentration (mass%) | Type | Concentration (mass%) | |
| 121 | Mg | 30 | ZA | 20 | Ti | 20 | B | 49.9 | - | 0 | Al | 0.1 | |
| 122 | Mg | 30 | ZA | 20 | Ti | 20 | B | 49.4 | - | 0 | Si2 | 0.6 | |
| 123 | Mg | 30 | ZA | 20 | Ti | 20 | B | 49.7 | - | 0 | Si2 | 0.3 | |
| 124 | Mg | 30 | ZA | 20 | Ti | 20 | B | 49.9 | - | 0 | Si2 | 0.1 | |
| 125 | Mg | 30 | ZA | 20 | Ti | 20 | B | 48 | - | 0 | PZ | 2 | |
| 126 | Mg | 30 | ZA | 20 | Ti | 20 | B | 49.4 | - | 0 | PZ | 0.6 | |
| 127 | Mg | 30 | ZA | 20 | Ti | 20 | B | 49.8 | - | 0 | PZ | 0.2 | |
| 128 | Mg | 30 | ZA | 20 | Ti | 20 | B | 48.8 | - | 0 | V | 1.2 | |
| 129 | Mg | 30 | ZA | 20 | Ti | 20 | B | 49.4 | - | 0 | V | 0.6 | |
| 130 | Mg | 30 | ZA | 20 | Ti | 20 | B | 49.8 | - | 0 | V | 0.2 | |
| 131 | Mg | 30 | ZA | 20 | Ti | 20 | B | 49 | - | 0 | Cr | 1 | |
| 132 | Mg | 30 | ZA | 20 | Ti | 20 | B | 49.5 | - | 0 | Cr | 0.5 | |

<Hot pressing process>

After the formation process of the surface treatment layer, the steel sheet of each test number was subjected to hot press heating by two types of heating systems of furnace heating and energization heating, and thus hot pressing was performed. In the furnace heating, the atmosphere in the furnace was set to 910°C and the air-fuel ratio was set to 1.1, and the steel sheet was taken out of the furnace immediately after the temperature of the steel sheet reached 900°C. In the energization heating, heating was performed at 870°C, with the heating rate set to 85°C/second and 42.5°C/second. In the following, the results of energization heating, which is heating of a shorter time than furnace heating, are shown in Table 3, and the results by furnace heating are shown in Table 4.

After the hot press heating, cooling was performed until the temperature of the steel sheet became 650°C. After the cooling, the steel sheet was sandwiched by a flat sheet mold equipped with a water cooling jacket, and thus a hot pressed steel material (steel sheet) was produced. Cooling was performed up to approximately 360°C, which is the martensite transformation starting point, so as to ensure a cooling rate of 50°C/second or more even in a portion where the cooling rate had been low during the hot pressing, and thus quenching was performed.

<Evaluation method>

[Phosphate treatability evaluation test]

The sheet-like hot pressed steel material of each of the test numbers described in Table 3 and Table 4 below was subjected to surface conditioning at room temperature for 20 seconds using a surface conditioning treatment agent, Prepalene X (product name) produced by Nihon Parkerizing Co.,Ltd. Further, phosphate treatment was performed using a zinc phosphate treatment liquid, Palbond 3020 (product name) produced by Nihon Parkerizing Co.,Ltd. The sheet-like hot pressed steel material was dipped in the treatment liquid for 120 seconds, with the temperature of the treatment liquid set to 43°C, and then water washing and drying were performed.

Random 5 visual fields (125 $\mu$m $\times$ 90 $\mu$m) of the surface of the hot pressed steel material after phosphate treatment were observed with a scanning electron microscope (SEM) at a magnification of 1000 times, and back scattered electron images (BSE images) were obtained. In the back scattered electron image, the observation area was displayed as an image by the gray scale. In the back scattered electron image, the contrast is different between a portion where a phosphate coating film that is a chemical conversion coating film is formed and a portion where a phosphate coating film is not formed. Thus, the numerical range X1 of the lightness (a plurality of levels of gradation) of a portion where a phosphate coating film was not formed was determined in advance by a SEM and an energy dispersive X-ray spectrometer (EDS).

In the back scattered electron image of each visual field, the area A1 of an area showing the contrast of the numerical range X1 was found by image processing. Then, the transparent area ratio TR (%) of each visual field was found on the basis of Formula (1) below.

$$TR = (A1/A0) \times 100 \cdots (1)$$

Here, in Formula (1) above, A0 represents the total area of the visual field (11,250 $\mu$m$^2$). The average of the transparent area ratios TR (%) of the 5 visual fields was defined as the transparent area ratio (%) of the hot pressed steel material of the test number.

"M" in the "Phosphate treatability" section in Table 3 and Table 4 means that the transparent area ratio was 30% or more. "L" means that the transparent area ratio was not less than 25% and less than 30%. "K" means that the transparent area ratio was not less than 20% and less than 25%. "J" means that the transparent area ratio was not less than 15% and less than 20%. "I" means that the transparent area ratio was not less than 13% and less than 15%. "H" means that the transparent area ratio was not less than 11% and less than 13%. "G" means that the transparent area ratio was not less than 10% and less than 11%. "F" means that the transparent area ratio was not less than 18% and less than 10%. "E" means that the transparent area ratio was not less than 6% and less than 8%. "D" means that the transparent area ratio was not less than 5% and less than 6%. "C" means that the transparent area ratio was not less than 2.5% and less than 5%. "B" means that the transparent area ratio was not less than 1% and less than 2.5%. "A" means that the transparent area ratio was less than 1%. The case of "I," "H," "G," "F," "E," "D," "C," "B," or "A" in the transparency evaluation was assessed as excellent in phosphate treatability.

[Coating adhesiveness evaluation test]

After the phosphate treatment described above was performed, the sheet-like hot pressed steel material of each test number was coated with a cationic electrodeposition coating material produced by Nippon Paint Co., Ltd. by electrodeposition with slope energization at a voltage of 160 V, and baking coating was performed at a baking temperature of 170°C for 20 minutes. The average of film thicknesses of the coating material after electrodeposition coating was 10 $\mu$m in all the test numbers.

After the electrodeposition coating, the hot pressed steel material was dipped in a 5% NaCl aqueous solution having a temperature of 50°C for 500 hours. After the dipping, a polyester tape was adhered to the whole of an area of 60 mm × 120 mm (area A10 = 60 mm × 120 mm = 7200 mm$^2$) of the test surface. After that, the tape was ripped off. The area A2 (mm$^2$) of the coating film peeled off by the ripping-off of the tape was found, and the rate of coating peeling (%) was found on the basis of Formula (2).

$$\text{Rate of coating peeling} = (A2/A10) \times 100 \cdots(2)$$

"M" of the "Coating adhesiveness" section in Table 3 and Table 4 means that the rate of coating peeling was 50.0% or more. "L" means that the rate of coating peeling was not less than 35% and less than 50%. "K" means that the rate of coating peeling was not less than 20% and less than 35%. "J" means that the rate of coating peeling was not less than 10% and less than 20%. "I" means that the rate of coating peeling was not less than 8% and less than 10%. "H" means that the rate of coating peeling was not less than 6% and less than 8%. "G" means that the rate of coating peeling was not less than 5% and less than 6%. "F" means that the rate of coating peeling was not less than 4% and less than 5%. "E" means that the rate of coating peeling was not less than 3% and less than 4%. "D" means that the rate of coating peeling was not less than 2.5% and less than 3%. "C" means that the rate of coating peeling was not less than 1.3% and less than 2.5%. "B" means that the rate of coating peeling was not less than 0.5% and less than 1.3%. "A" means that the rate of coating peeling was less than 0.5%. The case of "I," "H," "G," "F," "E," "D," "C," "B," or "A" in the coating adhesiveness evaluation was assessed as excellent in coating adhesiveness.

[Cycle corrosion test]

A gap was provided to the coating of the evaluation surface with a cutter (load: 500 gf; 1 gf being approximately $9.8 \times 10^{-3}$ N), and a cycle corrosion test of the following cycle conditions was performed 180 cycles.

●Cycle conditions

A cycle corrosion test was performed in which a procedure of 2 hr of salt water spraying (SST; 5% NaCl; atmosphere: 35°C), then 4 hr of drying (60°C), and then 2 hr of wetting (50°C; RH: 98%) was taken as 1 cycle.

After that, the presence or absence of a blister of the coating film occurring in an area of an approximately 1 cm width from the cut portion was observed.

"E" of the "Corrosion resistance" section in Table 3 and Table 4 means that a coating blister of 3.0 mm or more occurred. "D" means that a coating blister of not less than 2.0 mm and less than 3.0 mm occurred. "C" means that a coating blister of not less than 1.0 mm and less than 2.0 mm occurred. "B" means that a minute coating blister of not less than 0.5 mm and less than 1 mm occurred. "A" means that a very minute coating blister of less than 0.5 mm occurred. The case of "C," "B," or "A" in the cycle corrosion test was assessed as excellent in corrosion resistance.

[Table 7]

Table 3-1

| No. | Steel type | Zn-based plating layer | | Surface treatment layer | | | | | Hot pressing process | | | Notes |
| | | | | | | | | | Energization heating | | | |
| | | Type | Al concentration (mass%) | Type | Attached amount (g/m²) | Oxide A (g/m²) | Oxide B (g/m²) | Oxide C (g/m²) | Phosphate treatability | Coating adhesiveness | Corrosion resistance | |
|---|---|---|---|---|---|---|---|---|---|---|---|---|
| 1 | #1 | GA | 0.2 | 1 | 1 | 1 | 0 | 0 | D | G | B | |
| 2 | #1 | GA | 0.2 | 2 | 1 | 0.75 | 0 | 0 | D | G | B | |
| 3 | #1 | GA | 0.2 | 3 | 1 | 0.4 | 0 | 0 | D | G | B | |
| 4 | #1 | GA | 0.2 | 4 | 1 | 0.2 | 0 | 0 | G | G | C | |
| 5 | #1 | GA | 2 | 5 | 1 | 0.5 | 0 | 0 | D | G | B | |
| 6 | #1 | GA | 0.2 | 6 | 1 | 0.5 | 0 | 0 | D | G | B | |
| 7 | #1 | GA | 0.2 | 7 | 1 | 0.5 | 0 | 0 | D | G | B | |
| 8 | #1 | GA | 0.2 | 8 | 1 | 0.5 | 0 | 0 | D | G | B | |
| 9 | #1 | GA | 0.2 | 9 | 1 | 0.5 | 0 | 0 | D | G | B | |
| 10 | #1 | GA | 0.2 | 10 | 1 | 0.5 | 0 | 0 | D | G | B | |
| 11 | #1 | GA | 0.2 | 11 | 1 | 0.5 | 0 | 0 | D | G | B | |
| 12 | #1 | GA | 0.2 | 12 | 1 | 0.5 | 0 | 0 | D | G | B | |
| 13 | #1 | GA | 0.2 | 13 | 1 | 0.5 | 0 | 0 | D | G | B | |
| 14 | #1 | GA | 0.2 | 14 | 1 | 0.5 | 0 | 0 | D | G | C | |
| 15 | #1 | GA | 0.2 | 15 | 1 | 0.5 | 0 | 0 | D | G | B | |
| 16 | #1 | GA | 0.2 | 16 | 1 | 0.5 | 0 | 0 | G | G | C | |
| 17 | #1 | GA | 0.2 | 17 | 1 | 0.5 | 0 | 0 | G | G | C | |
| 18 | #1 | GA | 0.2 | 18 | 1 | 1 | 0 | 0 | A | M | E | Comparative Example |
| 19 | #1 | GA | 0.2 | 19 | 1 | 0.5 | 0 | 0 | D | M | E | Comparative Example |

| No. | Steel type | Zn-based plating layer | | Surface treatment layer | | | | | Hot pressing process | | | Notes |
| | | Type | Al concentration (mass%) | Type | Attached amount (g/m²) | Oxide A (g/m²) | Oxide B (g/m²) | Oxide C (g/m²) | Energization heating | | | |
| | | | | | | | | | Phosphate treatability | Coating adhesiveness | Corrosion resistance | |
| 20 | #1 | GA | 0. 2 | 20 | 1 | 0.5 | 0 | 0 | D | G | B | |
| 21 | #1 | GA | 0.2 | 21 | 1 | 0.5 | 0 | 0 | D | G | B | |
| 22 | #1 | GA | 0. 2 | 22 | 1 | 0.5 | 0 | 0 | D | G | B | |
| 23 | #1 | GA | 0. 2 | 23 | 1 | 0.5 | 0 | 0 | D | G | B | |
| 24 | #1 | GA | 0.2 | 24 | 1 | 0.5 | 0 | 0 | D | G | B | |
| 25 | #1 | GA | 0.2 | 25 | 1 | 0.5 | 0 | 0 | D | G | B | |
| 26 | #1 | GA | 0.2 | 26 | 1 | 0.6 | 0 | 0 | D | G | B | |
| 27 | #1 | GA | 0.2 | 27 | 1 | 0.6 | 0 | 0 | D | G | B | |
| 28 | #1 | GA | 0.2 | 28 | 1 | 0.6 | 0 | 0 | D | G | B | |
| 29 | #1 | GA | 0.2 | 29 | 1 | 1 | 0 | 0 | M | M | E | Comparative Example |
| 30 | #1 | GA | 0.2 | 30 | 1 | 0.5 | 0 | 0 | M | M | E | Comparative Example |

[Table 8]

Table 3-2

| No. | Steel type | Zn-based plating layer | | Surface treatment layer | | | | | Hot pressing process | | | Notes |
| | | Type | Al concentration (mass%) | Type | Attached amount (g/m²) | Oxide A (g/m²) | Oxide B (g/m²) | Oxide C (g/m²) | Energization heating | | | |
| | | | | | | | | | Phosphate treatability | Coating adhesiveness | Corrosion resistance | |
|---|---|---|---|---|---|---|---|---|---|---|---|---|
| 31 | #1 | GA | 0.2 | 31 | 1 | 0 | 0 | 0 | J | M | E | Comparative Example |
| 32 | #1 | GA | 0.2 | 32 | 1 | 0 | 0 | 0 | J | M | E | Comparative Example |
| 33 | #2 | GA | 0.2 | 5 | 2 | 1 | 0 | 0 | D | G | B | |
| 34 | #3 | GA | 0.2 | 5 | 2 | 1 | 0 | 0 | D | G | B | |
| 35 | #4 | GA | 0.2 | 5 | 1 | 0.5 | 0 | 0 | D | G | B | |
| 36 | #5 | GA | 0.2 | 5 | 1 | 0.5 | 0 | 0 | D | G | B | |
| 37 | #6 | GA | 0.2 | 5 | 1 | 0.5 | 0 | 0 | D | G | B | |
| 38 | #1 | GI | 0.4 | 5 | 1 | 0.5 | 0 | 0 | D | G | B | |
| 39 | #1 | A1 | 55 | 5 | 1 | 0.5 | 0 | 0 | D | G | B | |
| 40 | #1 | A2 | 6 | 5 | 1 | 0.5 | 0 | 0 | D | G | B | |
| 41 | #1 | A3 | 11 | 5 | 1 | 0.5 | 0 | 0 | D | G | B | |
| 42 | #1 | GA | 0.2 | 5 | 0.2 | 0.1 | 0 | 0 | J | J | D | Comparative Example |
| 43 | #1 | GA | 0.2 | 5 | 0.5 | 0.25 | 0 | 0 | G | G | C | |
| 44 | #1 | GA | 0.2 | 5 | 1 | 0.5 | 0 | 0 | D | G | B | |
| 45 | #1 | GA | 0.2 | 5 | 3 | 1.5 | 0 | 0 | D | G | B | |
| 46 | #1 | GA | 0.2 | 5 | 6 | 3 | 0 | 0 | D | G | C | |
| 47 | #1 | GA | 0.2 | 5 | 15 | 7.5 | 0 | 0 | D | J | D | Comparative Example |
| 48 | #1 | GA | 0.2 | 33 | 2 | 0.6 | 0 | 0.4 | D | D | A | |

34

EP 3 241 921 B1

(continued)

| No. | Steel type | Zn-based plating layer | | Surface treatment layer | | | | | Hot pressing process — Energization heating | | | Notes |
|---|---|---|---|---|---|---|---|---|---|---|---|---|
| | | Type | Al concentration (mass%) | Type | Attached amount (g/m²) | Oxide A (g/m²) | Oxide B (g/m²) | Oxide C (g/m²) | Phosphate treatability | Coating adhesiveness | Corrosion resistance | |
| 49 | #1 | GA | 0.2 | 34 | 2 | 0.6 | 0 | 0.4 | D | D | A | |
| 50 | #1 | GA | 0.2 | 35 | 2 | 0.6 | 0 | 0.4 | D | D | A | |
| 51 | #1 | GA | 0.2 | 36 | 2 | 0.6 | 0 | 0.4 | D | D | A | |
| 52 | #1 | GA | 0.2 | 37 | 2 | 0.7 | 0 | 0.5 | D | D | A | |
| 53 | #1 | GA | 0.2 | 38 | 2 | 0.7 | 0 | 0.5 | D | D | C | |
| 54 | #1 | GA | 0.2 | 39 | 2 | 0.6 | 0 | 0.4 | D | D | C | |
| 55 | #1 | GA | 0.2 | 40 | 2 | 0.6 | 0 | 0.4 | D | D | C | |
| 56 | #1 | GA | 0.2 | 41 | 2 | 0.7 | 0 | 0.5 | D | D | C | |
| 57 | #1 | GA | 0.2 | 42 | 2 | 0.6 | 0 | 0.4 | D | D | C | |
| 58 | #1 | GA | 0.2 | 43 | 2 | 0.4 | 0 | 1 | D | D | C | |
| 59 | #1 | GA | 0.2 | 44 | 2 | 0.6 | 0 | 0.4 | D | D | C | |
| 60 | #1 | GA | 0.2 | 45 | 2 | 0.1 | 0 | 0.1 | J | J | D | Comparative Example |

[Table 9]

Table 3-3

| No. | Steel type | Zn-based plating layer | | Surface treatment layer | | | | | Hot pressing process | | | Notes |
| | | Type | Al concentration (mass%) | Type | Attached amount (g/m$^2$) | Oxide A (g/m$^2$) | Oxide B (g/m$^2$) | Oxide C (g/m$^2$) | Energization heating | | | |
| | | | | | | | | | Phosphate treatability | Coating adhesiveness | Corrosion resistance | |
| 61 | #1 | GA | 0.2 | 46 | 2 | 0.6 | 0 | 1 | D | D | A | |
| 62 | #1 | GA | 0.2 | 47 | 2 | 0.6 | 0.4 | 0 | A | D | B | |
| 63 | #1 | GA | 0.2 | 48 | 2 | 0.6 | 0.4 | 0 | A | D | B | |
| 64 | #1 | GA | 0.2 | 49 | 2 | 0.6 | 0.4 | 0 | A | D | B | |
| 65 | #1 | GA | 0.2 | 50 | 2 | 0.6 | 0.4 | 0 | A | D | B | |
| 66 | #1 | GA | 0.2 | 51 | 2 | 0.7 | 0.5 | 0 | A | D | B | |
| 67 | #1 | GA | 0.2 | 52 | 2 | 0.7 | 0.5 | 0 | A | D | B | |
| 68 | #1 | GA | 0.2 | 53 | 2 | 0.6 | 0.4 | 0 | A | D | B | |
| 69 | #1 | GA | 0.2 | 54 | 2 | 0.6 | 0.4 | 0 | A | D | B | |
| 70 | #1 | GA | 0.2 | 55 | 2 | 0.7 | 0.5 | 0 | A | D | B | |
| 71 | #1 | GA | 0.2 | 56 | 2 | 0.7 | 0.5 | 0 | A | D | B | |
| 72 | #1 | GA | 0.2 | 57 | 2 | 0.4 | 1 | 0 | A | D | B | |
| 73 | #1 | GA | 0.2 | 58 | 2 | 0.2 | 1 | 0 | D | D | B | |
| 74 | #1 | GA | 0.2 | 59 | 2 | 0.1 | 0.1 | 0 | G | J | D | |
| 75 | #1 | GA | 0.2 | 60 | 2 | 0.6 | 1 | 0 | A | D | B | |
| 76 | #1 | GA | 0.2 | 61 | 3 | 0.9 | 0.6 | 0.6 | A | A | A | |
| 77 | #1 | GA | 0.2 | 62 | 3 | 0.9 | 0.6 | 0.6 | A | A | B | |
| 78 | #1 | GA | 0.2 | 63 | 3 | 0.9 | 0.6 | 0.6 | A | A | B | |
| 79 | #1 | GA | 0.2 | 64 | 3 | 0.9 | 0.6 | 0.6 | A | A | A | |
| 80 | #1 | GA | 0.2 | 65 | 3 | 0.9 | 0.6 | 0.6 | A | A | A | |
| 81 | #1 | GA | 0.2 | 66 | 3 | 0.9 | 0.6 | 0.6 | A | A | A | |

| No. | Steel type | Zn-based plating layer | | Surface treatment layer | | | | | Hot pressing process | | | Notes |
| | | | | | | | | | Energization heating | | | |
| | | Type | Al concentration (mass%) | Type | Attached amount (g/m$^2$) | Oxide A (g/m$^2$) | Oxide B (g/m$^2$) | Oxide C (g/m$^2$) | Phosphate treatability | Coating adhesiveness | Corrosion resistance | |
|---|---|---|---|---|---|---|---|---|---|---|---|---|
| 82 | #1 | GA | 0.2 | 67 | 3 | 0.9 | 0.6 | 0.6 | A | A | A | |
| 83 | #1 | GA | 0.2 | 68 | 3 | 0.9 | 0.6 | 0.6 | A | A | A | |
| 84 | #1 | GA | 0.2 | 69 | 3 | 0.9 | 0.6 | 0.6 | A | A | A | |
| 85 | #1 | GA | 0.2 | 70 | 3 | 0.9 | 0.6 | 0.6 | A | A | A | |
| 86 | #1 | GA | 0.2 | 71 | 3 | 0.9 | 0.6 | 0.6 | A | A | A | |
| 87 | #1 | GA | 0.2 | 72 | 3 | 0.9 | 0.6 | 0.6 | A | A | A | |
| 88 | #1 | GA | 0.2 | 73 | 3 | 0.9 | 0.6 | 0.6 | A | A | A | |
| 89 | #1 | GA | 0.2 | 74 | 3 | 0.9 | 0.6 | 0.6 | A | A | A | |
| 90 | #1 | GA | 0.2 | 51 | 0.5 | 0.175 | 0.125 | 0 | G | J | D | Comparative Example |

EP 3 241 921 B1

[Table 10]

Table 3-4

| No. | Steel type | Zn-based plating layer | | Surface treatment layer | | | | | Hot pressing process | | | Notes |
| | | | | | | | | | Energization heating | | | |
| | | Type | Al concentration (mass%) | Type | Attached amount (g/m²) | Oxide A (g/m²) | Oxide B (g/m²) | Oxide C (g/m²) | Phosphate treatability | Coating adhesiveness | Corrosion resistance | |
| --- | --- | --- | --- | --- | --- | --- | --- | --- | --- | --- | --- | --- |
| 91 | #1 | GA | 0.2 | 51 | 1 | 0.35 | 0.25 | 0 | D | G | C | |
| 92 | #1 | GA | 0.2 | 51 | 4 | 1.4 | 1 | 0 | A | D | B | |
| 93 | #1 | GA | 0.2 | 51 | 8 | 2.8 | 2 | 0 | A | G | B | |
| 94 | #1 | GA | 0.2 | 37 | 0.5 | 0.175 | 0 | 0.125 | J | J | D | Comparative Example |
| 95 | #1 | GA | 0.2 | 37 | 1 | 0.35 | 0 | 0.25 | G | D | B | |
| 96 | #1 | GA | 0.2 | 37 | 4 | 1.4 | 0 | 1 | 0 | A | A | |
| 97 | #1 | GA | 0.2 | 37 | 8 | 2.8 | 0 | 2 | D | A | A | |
| 98 | #2 | GA | 0.2 | 51 | 2 | 0.7 | 0.5 | 0 | A | D | B | |
| 99 | #3 | GA | 0.2 | 51 | 2 | 0.7 | 0.5 | 0 | A | D | B | |
| 100 | #4 | GA | 0.2 | 51 | 2 | 0.7 | 0.5 | 0 | A | D | B | |
| 101 | #5 | GA | 0.2 | 51 | 2 | 0.7 | 0.5 | 0 | A | D | B | |
| 102 | #6 | GA | 0.2 | 51 | 2 | 0.7 | 0.5 | 0 | A | D | B | |
| 103 | #1 | GI | 0.4 | 51 | 2 | 0.7 | 0.5 | 0 | A | D | B | |
| 104 | #1 | A1 | 55 | 51 | 2 | 0.7 | 0.5 | 0 | D | D | B | |
| 105 | #1 | A2 | 6 | 51 | 2 | 0.7 | 0.5 | 0 | A | D | B | |
| 106 | #1 | A3 | 11 | 51 | 2 | 0.7 | 0.5 | 0 | D | D | B | |
| 107 | #2 | GA | 0.2 | 37 | 2 | 0. 7 | 0 | 0.5 | D | A | A | |
| 108 | #3 | GA | 0.2 | 37 | 2 | 0.7 | 0 | 0.5 | D | A | A | |
| 109 | #4 | GA | 0.2 | 37 | 2 | 0.7 | 0 | 0.5 | D | A | A | |
| 110 | #5 | GA | 0.2 | 37 | 2 | 0.7 | 0 | 0.5 | D | A | A | |

EP 3 241 921 B1

40

| No. | Steel type | Zn-based plating layer | | Surface treatment layer | | | | | | Hot pressing process | | | Notes |
|---|---|---|---|---|---|---|---|---|---|---|---|---|---|
| | | | | | | | | | | Energization heating | | | |
| | | Type | Al concentration (mass%) | Type | Attached amount (g/m$^2$) | Oxide A (g/m$^2$) | Oxide B (g/m$^2$) | Oxide C (g/m$^2$) | | Phosphate treatability | Coating adhesiveness | Corrosion resistance | |
| 111 | #6 | GA | 0.2 | 37 | 2 | 0.7 | 0 | 0.5 | | D | A | A | |
| 112 | #1 | GI | 0.4 | 37 | 2 | 0.7 | 0 | 0.5 | | D | A | A | |
| 113 | #1 | A1 | 55 | 37 | 2 | 0.7 | 0 | 0.5 | | D | A | A | |
| 114 | #1 | A2 | 6 | 37 | 2 | 0.7 | 0 | 0.5 | | D | A | A | |
| 115 | #1 | A3 | 6 | 37 | 2 | 0.7 | 0 | 0.5 | | D | A | A | |
| 116 | #1 | GA | 0.2 | 61 | 3 | 0.9 | 0.6 | 0.6 | | A | A | A | |
| 117 | #1 | GA | 0.2 | 61 | 2 | 0.6 | 0.4 | 0.4 | | A | A | A | |
| 118 | #1 | GA | 0.2 | 61 | 5 | 1.5 | 1 | 1 | | A | A | A | |
| 119 | #1 | GA | 0.2 | 61 | 7 | 2.1 | 1.4 | 1.4 | | A | A | A | |
| 120 | #1 | GA | 0.2 | 61 | 9 | 2.7 | 1.8 | 1.8 | | A | A | A | |

[Table 11]

EP 3 241 921 B1

Table 3-5

| No. | Steel type | Zn-based plating layer | | Surface treatment layer | | | | | Hot pressing process | | | Notes |
|---|---|---|---|---|---|---|---|---|---|---|---|---|
| | | | | | | | | | Energization heating | | | |
| | | Type | Al concentration (mass%) | Type | Attached amount (g/m²) | Oxide A (g/m²) | Oxide B (g/m²) | Oxide C (g/m²) | Phosphate treatability | Coating adhesiveness | Corrosion resistance | |
| 121 | #1 | GA | 0.2 | 61 | 1 | 0.3 | 0.2 | 0.2 | D | D | B | |
| 122 | #1 | GA | 0.2 | 61 | 0.5 | 0.15 | 0.1 | 0.1 | G | J | C | Comparative Example |
| 123 | #4 | GA | 0.2 | 61 | 3 | 0.9 | 0.6 | 0.6 | A | A | A | |
| 124 | #5 | GA | 0.2 | 61 | 3 | 0.9 | 0.6 | 0.6 | A | A | A | |
| 125 | #6 | GA | 0.2 | 61 | 3 | 0.9 | 0.6 | 0.6 | A | A | A | |
| 126 | #7 | GA | 0.2 | 61 | 3 | 0.9 | 0.6 | 0.6 | A | A | A | |
| 127 | #8 | GA | 0.2 | 61 | 3 | 0.9 | 0.6 | 0.6 | A | A | A | |
| 128 | #1 | GI | 0.4 | 61 | 3 | 0.9 | 0.6 | 0.6 | A | A | A | |
| 129 | #1 | A1 | 55 | 61 | 3 | 0. 9 | 0.6 | 0.6 | A | A | A | |
| 130 | #1 | A2 | 6 | 61 | 3 | 0.9 | 0.6 | 0.6 | A | A | A | |
| 131 | #1 | A3 | 11 | 61 | 3 | 0.9 | 0.6 | 0.6 | A | A | A | |
| 132 | #1 | A4 | 0 | 61 | 3 | 0.9 | 0.6 | 0.6 | A | A | A | |
| 133 | #1 | A5 | 0 | 61 | 3 | 0.9 | 0.6 | 0.6 | A | A | A | |
| 134 | #1 | A6 | 0 | 61 | 3 | 0.9 | 0.6 | 0.6 | A | A | A | |
| 135 | #1 | A4 | 0 | 61 | 3 | 0.9 | 0.6 | 0.6 | A | A | A | |
| 136 | #1 | A5 | 0 | 61 | 3 | 0.9 | 0.6 | 0.6 | A | A | A | |
| 137 | #1 | A6 | 0 | 61 | 3 | 0.9 | 0.6 | 0.6 | A | A | A | |
| 138 | #1 | GA | 0.2 | 75 | 3 | 0.9 | 0.6 | 0.6 | A | A | A | |
| 139 | #1 | GA | 0.2 | 76 | 3 | 0.9 | 0.6 | 0.6 | A | A | A | |
| 140 | #1 | GA | 0.2 | 77 | 3 | 0.9 | 0.6 | 0.6 | A | A | A | |

43

[Table 12]

Table 4

| No. | Steel type | Zn-based plating layer | | Surface treatment layer | | | | | Hot pressing process | | | Notes |
| | | | | | | | | | Furnace heating | | | |
| | | Type | Al concentration (mass%) | Type | Attached amount (g/m$^2$) | Oxide A (g/m$^2$) | Oxide B (g/m$^2$) | Oxide C (g/m$^2$) | Phosphate treatability | Coating adhesiveness | Corrosion resistance | |
|---|---|---|---|---|---|---|---|---|---|---|---|---|
| 141 | #1 | GA | 0.2 | 5 | 1.0 | 0.5 | 0 | 0 | D | A | B | |
| 142 | #1 | GA | 0.2 | 5 | 2.0 | 1.0 | 0 | 0 | D | A | B | |
| 143 | #1 | GA | 0.2 | 5 | 4.0 | 2.0 | 0 | 0 | D | A | B | |
| 144 | #1 | GI | 0.4 | 5 | 2.0 | 1.0 | 0 | 0 | D | A | B | |
| 145 | #1 | A1 | 55 | 5 | 2.0 | 1.0 | 0 | 0 | D | D | B | |
| 146 | #1 | A2 | 6 | 5 | 2.0 | 1.0 | 0 | 0 | D | A | B | |
| 147 | #1 | A3 | 11 | 5 | 2.0 | 1.0 | 0 | 0 | D | D | B | |
| 148 | #1 | A4 | 0 | 5 | 2.0 | 1.0 | 0 | 0 | D | A | B | |
| 149 | #1 | A5 | 0 | 5 | 2.0 | 1.0 | 0 | 0 | D | A | B | |
| 150 | #1 | A6 | 0 | 5 | 2.0 | 1.0 | 0 | 0 | D | A | B | |
| 151 | #1 | GA | 0.2 | 61 | 1.0 | 0.5 | 0 | 0 | A | A | A | |
| 152 | #1 | GA | 0.2 | 61 | 2.0 | 1.0 | 0 | 0 | A | A | A | |
| 153 | #1 | GA | 0.2 | 61 | 4.0 | 2.0 | 0 | 0 | A | A | A | |
| 154 | #1 | GI | 0.4 | 5 | 2.0 | 1.0 | 0 | 0 | A | A | A | |
| 155 | #1 | A1 | 55 | 61 | 2.0 | 1.0 | 0 | 0 | D | A | A | |
| 156 | #1 | A2 | 6 | 61 | 2.0 | 1.0 | 0 | 0 | A | A | A | |
| 157 | #1 | A3 | 11 | 61 | 2.0 | 1.0 | 0 | 0 | D | A | A | |
| 158 | #1 | A4 | 0 | 61 | 2.0 | 1.0 | 0 | 0 | A | A | A | |
| 159 | #1 | A5 | 0 | 61 | 2.0 | 1.0 | 0 | 0 | A | A | A | |
| 160 | #1 | A6 | 0 | 61 | 2.0 | 1.0 | 0 | 0 | A | A | A | |

EP 3 241 921 B1

Further, the sheet-like hot pressed steel material of each of the test numbers described in Table 5 below was subjected to, instead of the zinc phosphate treatment mentioned above, treatment using an aqueous solution containing Zr ions and/or Ti ions, and fluorine and containing 100 to 1000 ppm of free fluoride ions (hereinafter, referred to as an FF chemical conversion treatment liquid), and the coating adhesiveness and the corrosion resistance of the resulting test piece were verified.

The FF chemical conversion treatment liquid mentioned above dissolves free fluorine (hereinafter, abbreviated as FF), an Al oxide coating film, and a Zn oxide coating film. Therefore, while dissolving part or the whole of the Al oxide coating film and the Zn oxide coating film, FF etches the Zn-containing layer formed in the hot stamping process. As a result, a chemical conversion treatment layer made of an oxide of Zr and/or Ti, or a mixture of an oxide and a fluoride of Zr and/or Ti (hereinafter, referred to as a specific chemical conversion treatment layer) is formed. When the FF concentration is controlled so that the Al oxide coating film and the Zn oxide coating film can be etched, the Al oxide coating film and the Zn oxide coating film are etched, and the specific chemical conversion treatment layer is formed.

To obtain the FF chemical conversion treatment liquid, $H_2ZrF_6$ (hexafluorozirconic acid) and $H_2TiF_6$ (hexafluorotitanic acid) were put in a container so that the metal concentration might be a prescribed value, and were diluted with ion-exchanged water. After that, hydrofluoric acid and a sodium hydroxide aqueous solution were put in the container, and adjustment was made so that the fluorine concentration and the free fluorine concentration in the solution might be prescribed values. The free fluorine concentration was measured using a commercially available concentration measuring device. After the adjustment, the container was adjusted to a fixed volume with ion-exchanged water; thus, an FF chemical conversion treatment liquid was prepared.

The FF chemical conversion treatment was performed in the following manner. First, as pre-treatment, dipping degreasing was performed at 45°C for 2 minutes using an alkaline degreasing agent (EC90, produced by Nippon Paint Co., Ltd.). After that, dipping was performed in the FF chemical conversion treatment liquids shown in Table 6 below at 40°C for 120 seconds, and thus chemical conversion treatment was performed. After the chemical conversion treatment, the test piece was washed with water and dried.

[Table 13]

Table 5

| No. | Steel type | Zn-based plating layer | | Surface treatment layer | | | | | FF treatment | | Hot pressing process | | Notes |
|---|---|---|---|---|---|---|---|---|---|---|---|---|---|
| | | | | | | | | | | | Energization heating | | |
| | | Type | Al concentration (mass%) | Type | Attached amount (g/m²) | Oxide A (g/m²) | Oxide B (g/m²) | Oxide C (g/m²) | Type | FF treatability | Coating adhesiveness | Corrosion resistance | |
| 161 | #1 | GA | 0.2 | 5 | 1.0 | 0 5 | 0 | 0 | Zr | B | D | B | |
| 162 | #1 | GA | 0.2 | 5 | 2.0 | 1.0 | 0 | 0 | Zr | B | D | B | |
| 163 | #1 | GA | 0.2 | 5 | 4.0 | 2.0 | 0 | 0 | Zr | B | D | B | |
| 164 | #1 | GI | 0.4 | 5 | 2.0 | 1.0 | 0 | 0 | Zr | B | D | B | |
| 165 | #1 | A1 | 55 | 5 | 2. 0 | 1.0 | 0 | 0 | Zr | B | D | B | |
| 166 | #1 | A2 | 6 | 5 | 2.0 | 1.0 | 0 | 0 | Zr | B | D | B | |
| 167 | #1 | A3 | 11 | 5 | 2.0 | 1.0 | 0 | 0 | Zr | B | D | B | |
| 168 | #1 | A4 | 0 | 5 | 2.0 | 1.0 | 0 | 0 | Zr | B | D | B | |
| 169 | #1 | A5 | 0 | 5 | 2.0 | 1.0 | 0 | 0 | Zr | B | C | B | |
| 170 | #1 | A6 | 0 | 5 | 2.0 | 1.0 | 0 | 0 | Zr | B | D | B | |
| 171 | #1 | GA | 0.2 | 5 | 1.0 | 0.5 | 0 | 0 | Zr Ti | B | D | B | |
| 172 | #1 | GA | 0.2 | 5 | 2.0 | 1.0 | 0 | 0 | Ti | B | D | B | |
| 173 | #1 | GA | 0.2 | 5 | 4.0 | 2.0 | 0 | 0 | Ti | B | D | B | |
| 174 | #1 | GI | 0.4 | 5 | 2.0 | 1.0 | 0 | 0 | Ti | B | D | D B | |
| 175 | #1 | A1 | 55 | 5 | 2.0 | 1.0 | 0 | 0 | Ti | B | D | B | |
| 176 | #1 | A2 | 6 | 5 | 2.0 | 1.0 | 0 | 0 | Ti | B | D | B | |
| 177 | #1 | A3 | 11 | 5 | 2.0 | 1.0 | 0 | 0 | Ti | B | D | B | |
| 178 | #1 | A4 | 0 | 5 | 2.0 | 1.0 | 0 | 0 | Ti | B | D | B | |
| 119 | #1 | A5 | 0 | 5 | 2.0 | 1.0 | 0 | 0 | Ti | B | D | B | |
| 180 | #1 | A6 | 0 | 5 | 2.0 | 1.0 | 0 | 0 | Ti | B | D | B | |
| 181 | #1 | GA | 0.2 | 61 | 3 | 0.6 | 0.6 | 0.9 | Zr | A | A | A | |

| No. | Steel type | Zn-based plating layer | | Surface treatment layer | | | | | FF treatment | | Hot pressing process | | Notes |
| | | | | | | | | | | | Energization heating | | |
| | | Type | Al concentration (mass%) | Type | Attached amount (g/m$^2$) | Oxide A (g/m$^2$) | Oxide B (g/m$^2$) | Oxide C (g/m$^2$) | Type | FF treatability | Coating adhesiveness | Corrosion resistance | |
| 182 | #1 | GI | 0.4 | 61 | 3 | 0.6 | 0.6 | 0.9 | Zr | A | A | A | |
| 183 | #1 | A1 | 55 | 61 | 3 | 0.6 | 0.6 0. 6 | 0.9 | Zr | A | A | A | |
| 184 | #1 | A2 | 6 | 61 | 3 | 0.6 | 0.6 | 0.9 | Zr | A | A | A | |
| 185 | #1 | A3 | 11 | 61 | 3 | 0.6 | 0.6 | 0.9 | Zr | A | A | A | |
| 186 | #1 | A4 | 0 | 61 | 3 | 0.6 | 0.6 | 0.9 | Zr | A | A | A | |
| 187 | #1 | A5 | 0 | 61 | 3 | 0.6 | 0.6 | 0.9 | Zr | A | A | A | |
| 188 | #1 | A6 | 0 | 61 | 3 | 0.6 | 0.6 | 0.9 | Zr | A | A | A | |
| 189 | #1 | GA | 0.2 | 61 | 3 | 0.6 | 0.6 | 0.9 | Ti | A | A | A | |
| 190 | #1 | 61 | 0.4 | 61 | 3 | 0.6 | 0.6 | 0.9 | Ti | A | A | A | |
| 191 | #1 | A1 | 55 | 61 | 3 | 0.6 | 0.6 | 0.9 | Ti | A | A | A | |
| 192 | #1 | A2 | 6 | 61 | 3 | 0.6 | 0 6 | 0.9 | Ti | A | A | A | |
| 193 | #1 | A3 | 11 | 61 | 3 | 0.6 | 0.6 | 0.9 | Ti | A | A | A | |
| 194 | #1 | A4 | 0 | 61 | 3 | 0.6 | 0.6 | 0.9 | Ti | A | A | A | |
| 195 | #1 | A5 | 0 | 61 | 3 | 0.6 | 0.6 | 0.9 | Ti | A | A | A | |
| 196 | #1 | A6 | 0 | 61 | 3 | 0.6 | 0.6 | 0.9 | Ti | A | A | A | |

EP 3 241 921 B1

[Table 14]

Table 6 FF chemical conversion treatment liquid

| | Ion | | Fluorine concentration [ppm] | Free fluorine concentration [ppm] |
|---|---|---|---|---|
| | Ion source | Concentration [ppm] | | |
| Zr-based FF chemical conversion treatment liquid | $H_2ZrF_6$ | 5000 | 7000 | 300 |
| Ti-based FF chemical conversion treatment liquid | $H_2TiF_6$ | 5000 | 12000 | 300 |

To investigate the chemical conversion treatability of the specific chemical conversion treatment layer of the resulting test material, the amount of Zr or Ti attached was measured by fluorescent X-ray analysis; the case where the measurement value of the attached amount was 10 to 100 mg/m$^2$ was classified as "A," and the case where the measurement value of the attached amount was less than 10 mg/m$^2$ or more than 100 mg/m$^2$ was classified as "B"; the obtained results are collectively shown in Table 5. The method and the evaluation criterion of the coating adhesiveness evaluation test and the cycle corrosion test performed on the resulting test material are similar to those of the coating adhesiveness evaluation test and the cycle corrosion test performed on the test material on which the phosphate coating film mentioned above was formed.

Further, to verify the influence given by a P-containing compound, a V-containing compound, an Al-containing compound, a Si-containing compound, and a Cr-containing compound present in the surface treatment layer, plated steel sheets for hot pressing were produced using the treatment liquids shown in No. 77 to No. 132 of Table 2. At this time, each of the treatment liquids shown in No. 77 to No. 132 of Table 2 was applied with a bar coater, and was dried using an oven under conditions for keeping a maximum peak temperature of 100°C for 8 seconds. The amount of the treatment liquid attached was adjusted by the dilution of the liquid and the count of the bar coater so that the total amount of the attached nonvolatile content in the treatment liquid might be the numerical value shown in Table 7.

After the formation process of the surface treatment layer, the steel sheet of each test number was subjected to hot press heating by an energization heating system, and thus hot pressing was performed. At this time, heating was performed at 870°C, with the heating rate set to 85°C/second and 42.5°C/second.

After the hot press heating, cooling was performed until the temperature of the steel sheet became 650°C. After the cooling, the steel sheet was sandwiched by a flat sheet mold equipped with a water cooling jacket, and thus a hot pressed steel material (steel sheet) was produced. Cooling was performed up to approximately 360°C, which is the martensite transformation starting point, so as to ensure a cooling rate of 50°C/second or more even in a portion where the cooling rate had been low during the hot pressing, and thus quenching was performed.

The sheet-like hot pressed steel material of each of the test numbers described in Table 7 below was subjected to surface conditioning at room temperature for 20 seconds using a surface conditioning treatment agent, Prepalene X (product name) produced by Nihon Parkerizing Co.,Ltd. Further, phosphate treatment was performed using a zinc phosphate treatment liquid, Palbond 3020 (product name) produced by Nihon Parkerizing Co.,Ltd. The sheet-like hot pressed steel material was dipped in the treatment liquid for 30 seconds, with the temperature of the treatment liquid set to 43°C, and then water washing and drying were performed. After that, a phosphate treatability evaluation test was performed in a similar manner to the case shown in Table 3.

Further, the sheet-like hot pressed steel material of each of the test numbers described in Table 7 below was subjected to a coating adhesiveness evaluation test and a cycle corrosion test in a similar manner to the case shown in Table 3. The method and the evaluation criterion of each test are similar to those of the case shown in Table 3.

[Table 15]

Table 7-1

| No. | Steel type | Zn-based plating layer | | Surface treatment layer | | | | | Chemical conversion treatment | | Hot pressing process | | | Notes |
|---|---|---|---|---|---|---|---|---|---|---|---|---|---|---|
| | | Type | Al concentration (mass%) | Type | Attached amount (g/m²) | Oxide A (g/m²) | Oxide B (g/m²) | Oxide C (g/m²) | Type of chemical conversion treatment | Treatment time (sec) | Energization heating | | | |
| | | | | | | | | | | | Phosphate treatability | Coating adhesiveness | Corrosion resistance | |
| 197 | #1 | GA | 0.2 | 77 | 1 | 0 | 0 | 0 | Phosphoric acid | 30 | F | I | B | Al : 0.0106 g/m² |
| 198 | #1 | GA | 0.2 | 78 | 1 | 0 | 0 | 0 | Phosphoric acid | 30 | E | H | B | Al : 0.0048 g/m² |
| 199 | #1 | GA | 0.2 | 79 | 1 | 0 | 0 | 0 | Phosphoric acid | 30 | D | G | B | Al : 0.0160 g/m² |
| 200 | #1 | GA | 0.2 | 80 | 1 | 0 | 0 | 0 | Phosphoric acid | 30 | F | I | B | Si : 0.0093 g/m² |
| 201 | #1 | GA | 0.2 | 81 | 1 | 0 | 0 | 0 | Phosphoric acid | 30 | E | H | B | Si : 0.0047 g/m² |
| 202 | #1 | GA | 0.2 | 82 | 1 | 0 | 0 | 0 | Phosphoric acid | 30 | D | G | B | Si : 0.0014 g/m² |
| 203 | #1 | GA | 0.2 | 83 | 1 | 0 | 0 | 0 | Phosphoric acid | 30 | D | I | B | P : 0.0107 g/m² |
| 204 | #1 | GA | 0.2 | 84 | 1 | 0 | 0 | 0 | Phosohoric acid | 30 | D | H | B | P : 0.0043 g/m² |

EP 3 241 921 B1

(continued)

| No. | Steel type | Zn-based plating layer | | Surface treatment layer | | | | | Chemical conversion treatment | | Hot pressing process — Energization heating | | | Notes |
|---|---|---|---|---|---|---|---|---|---|---|---|---|---|---|
| | | Type | Al concentration (mass%) | Type | Attached amount (g/m²) | Oxide A (g/m²) | Oxide B (g/m²) | Oxide C (g/m²) | Type of chemical conversion treatment | Treatment time (sec) | Phosphate treatability | Coating adhesiveness | Corrosion resistance | |
| 205 | #1 | GA | 0.2 | 85 | 1 | 0 | 0 | 0 | Phosphoric acid | 30 | D | G | B | P : 0.0011 g/m² |
| 206 | #1 | GA | 0.2 | 86 | 1 | 0 | 0 | 0 | Phosphoric acid | 30 | D | I | B | V : 0.0148 g/m² |
| 207 | #1 | GA | 0.2 | 87 | 1 | 0 | 0 | 0 | Phosphoric acid | 30 | D | H | B | V : 0.0074 g/m² |
| 208 | #1 | GA | 0.2 | 88 | 1 | 0 | 0 | 0 | Phosphoric acid | 30 | D | G | B | V : 0.0018 g/m² |
| 209 | #1 | GA | 0.2 | 89 | 1 | 0 | 0 | 0 | Phosphoric acid | 30 | D | G | B | Cr : 0.0104 g/m² |
| 210 | #1 | GA | 0.2 | 90 | 1 | 0 | 0 | 0 | Phosphoric acid | 30 | D | G | B | Cr : 0.0042 g/m² |
| 211 | #1 | GA | 0.2 | 91 | 2 | 0 | 0 | 0 | Phosphoric acid | 30 | F | F | A | Al : 0.0053 g/m² |
| 212 | #1 | GA | 0.2 | 92 | 2 | 0 | 0 | 0 | Phosphoric acid | 30 | E | E | A | Al : 0.0021 g/m² |

| No. | Steel type | Zn-based plating layer | | Surface treatment layer | | | | | Chemical conversion treatment | | Hot pressing process | | | Notes |
| | | | | | | | | | | | Energization heating | | | |
| | | Type | Al concentration (mass%) | Type | Attached amount (g/m²) | Oxide A (g/m²) | Oxide B (g/m²) | Oxide C (g/m²) | Type of chemical conversion treatment | Treatment time (sec) | Phosphate treatabil ity | Coating adhesive ness | Corrosion resistance | |
|---|---|---|---|---|---|---|---|---|---|---|---|---|---|---|
| 213 | #1 | GA | 0.2 | 93 | 2 | 0 | 0 | 0 | Phosphoric acid | 30 | D | D | A | Al : 0.0005 g/m² |
| 214 | #1 | GA | 0.2 | 94 | 2 | 0 | 0 | 0 | Phosphoric acid | 30 | F | F | A | Si : 0.0047 g/m² |
| 215 | #1 | GA | 0.2 | 95 | 2 | 0 | 0 | 0 | Phosphori c acid | 30 | E | E | A | Si : 0.0023 g/m² |
| 216 | #1 | GA | 0.2 | 96 | 2 | 0 | 0 | 0 | Phosphoric acid | 30 | D | D | A | Si : 0.0005 g/m² |
| 217 | #1 | GA | 0.2 | 97 | 2 | 0 | 0 | 0 | Phosphoric acid | 30 | D | F | A | P : 0.0128 g/m² |
| 218 | #1 | GA | 0.2 | 98 | 2 | 0 | 0 | 0 | Phosphoric acid | 30 | D | E | A | P : 0.0043 g/m² |
| 219 | #1 | GA | 0.2 | 99 | 2 | 0 | 0 | 0 | Phosphoric acid | 30 | D | D | A | P : 0.0009 g/m² |
| 220 | #1 | GA | 0.2 | 100 | 2 | 0 | 0 | 0 | Phosphoric acid | 30 | D | F | A | V : 0.0074 g/m² |

(continued)

| No. | Steel type | Zn-based plating layer | | Surface treatment layer | | | | | Chemical conversion treatment | | Hot pressing process | | | Notes |
| | | | | | | | | | | | Energization heating | | | |
| | | Type | Al concentr ation (mass%) | Type | Attached amount (g/m²) | Oxide A (g/m²) | Oxide B (g/m²) | Oxide C (g/m²) | Type of chemical conversion treatment | Treatment time (sec) | Phosphate treatabil ity | Coating adhesive ness | Corrosion resistance | |
|---|---|---|---|---|---|---|---|---|---|---|---|---|---|---|
| 221 | #1 | GA | 0.2 | 101 | 2 | 0 | 0 | 0 | Phosphoric acid | 30 | D | E | A | V : 0.0037 g/m² |
| 222 | #1 | GA | 0.2 | 102 | 2 | 0 | 0 | 0 | Phosphoric acid | 30 | D | D | A | V : 0.0007 g/m² |
| 223 | #1 | GA | 0.2 | 103 | 2 | 0 | 0 | 0 | Phosphoric acid | 30 | D | D | A | Cr : 0.0052 g/m² |
| 224 | #1 | GA | 0.2 | 104 | 2 | 0 | 0 | 0 | Phosphori c acid | 30 | D | D | A | Cr : 0.0021 g/m² |

[Table 16]

EP 3 241 921 B1

Table 7-2

| No. | Steel type | Zn-based plating layer | | Surface treatment layer | | | | | Chemical conversion treatment | | Hot pressing process | | | Notes |
|---|---|---|---|---|---|---|---|---|---|---|---|---|---|---|
| | | | | | | | | | | | Energization heating | | | |
| | | Type | Al concentration (mass%) | Type | Attached amount (g/m²) | Oxide A (g/m²) | Oxide B (g/m²) | Oxide C (g/m²) | Type of chemical conversion treatment | Treatment time (sec) | Phosphate treatabil ity | Coating adhesive ness | Corrosion resistance | |
| 225 | #1 | GA | 0.2 | 105 | 2 | 0 | 0 | 0 | Phosphoric acid | 30 | C | F | B | Al : 0.0005 g/m² |
| 226 | #1 | GA | 0.2 | 106 | 2 | 0 | 0 | 0 | Phosphoric acid | 30 | B | E | B | Al : 0.0042 g/m² |
| 227 | #1 | GA | 0.2 | 107 | 2 | 0 | 0 | 0 | Phosphoric acid | 30 | A | D | B | Al : 0.0011 g/m² |
| 228 | #1 | GA | 0.2 | 108 | 2 | 0 | 0 | 0 | Phosphoric acid | 30 | C | F | B | Si : 0.0075 g/m² |
| 229 | #1 | GA | 0.2 | 109 | 2 | 0 | 0 | 0 | Phosphoric acid | 30 | B | E | B | Si : 0.0037 g/m² |
| 230 | #1 | GA | 0.2 | 110 | 2 | 0 | 0 | 0 | Phosphoric acid | 30 | A | D | B | Si : 0.0009 g/m² |
| 231 | #1 | GA | 0.2 | 111 | 2 | 0 | 0 | 0 | Phosphoric acid | 30 | A | F | B | P :0.0128 g/m² |
| 232 | #1 | GA | 0.2 | 112 | 2 | 0 | 0 | 0 | Phosphoric acid | 30 | A | E | B | P :0.0043 g/m² |
| 233 | #1 | GA | 0.2 | 113 | 2 | 0 | 0 | 0 | Phosphoric acid | 30 | A | D | B | P :0.0017 g/m² |
| 234 | #1 | GA | 0.2 | 114 | 2 | 0 | 0 | 0 | Phosphoric acid | 30 | A | F | B | V :0.0148 g/m² |

55

| No. | Steel type | Zn-based plating layer | | Surface treatment layer | | | | | Chemical conversion treatment | | Hot pressing process | | | Notes |
|---|---|---|---|---|---|---|---|---|---|---|---|---|---|---|
| | | | | | | | | | | | Energization heating | | | |
| | | Type | Al concentration (mass%) | Type | Attached amount $(g/m^2)$ | Oxide A $(g/m^2)$ | Oxide B $(g/m^2)$ | Oxide C $(g/m^2)$ | Type of chemical conversion treatment | Treatment time (sec) | Phosphate treatabil ity | Coating adhesive ness | Corrosion resistance | |
| 235 | #1 | GA | 0.2 | 115 | 2 | 0 | 0 | 0 | Phosphoric acid | 30 | A | E | B | V : 0.0074 $g/m^2$ |
| 236 | #1 | GA | 0.2 | 116 | 2 | 0 | 0 | 0 | Phosphoric acid | 30 | A | D | B | V : 0.0022 $g/m^2$ |
| 237 | #1 | GA | 0.2 | 117 | 2 | 0 | 0 | 0 | Phosphoric acid | 30 | A | D | B | Cr : 0.0156 $g/m^2$ |
| 238 | #1 | GA | 0.2 | 118 | 2 | 0 | 0 | 0 | Phosphoric acid | 30 | A | D | B | Cr : 0.0052 $g/m^2$ |
| 239 | #1 | GA | 0.2 | 119 | 3 | 0 | 0 | 0 | Phosphoric acid | 30 | C | 0 | A | Al : 0.0111 $g/m^2$ |
| 240 | #1 | GA | 0.2 | 120 | 3 | 0 | 0 | 0 | Phosphoric acid | 30 | B | B | A | Al : 0.0048 $g/m^2$ |
| 241 | #1 | GA | 0.2 | 121 | 3 | 0 | 0 | 0 | Phosphoric acid | 30 | A | A | A | Al : 0.0016 $g/m^2$ |
| 242 | #1 | GA | 0.2 | 122 | 3 | 0 | 0 | 0 | Phosphoric acid | 30 | 0 | C | A | Si : 0.0084 $g/m^2$ |
| 243 | #1 | GA | 0.2 | 123 | 3 | 0 | 0 | 0 | Phosphoric acid | 30 | B | B | A | Si : 0.0042 $g/m^2$ |

EP 3 241 921 B1

56

| No. | Steel type | Zn-based plating layer | | Surface treatment layer | | | | | Chemical conversion treatment | | Hot pressing process | | | Notes |
| | | | | | | | | | | | Energization heating | | | |
| | | Type | Al concentration (mass%) | Type | Attached amount (g/m$^2$) | Oxide A (g/m$^2$) | Oxide B (g/m$^2$) | Oxide C (g/m$^2$) | Type of chemical conversion treatment | Treatment time (sec) | Phosphate treatabil ity | Coating adhesive ness | Corrosion resistance | |
|---|---|---|---|---|---|---|---|---|---|---|---|---|---|---|
| 244 | #1 | GA | 0.2 | 124 | 3 | 0 | 0 | 0 | Phosphoric acid | 30 | A | A | A | Si : 0.0014 g/m$^2$ |
| 245 | #1 | GA | 0.2 | 125 | 3 | 0 | 0 | 0 | Phosphoric acid | 30 | A | C | A | P :0.0128 g/m$^2$ |
| 246 | #1 | GA | 0.2 | 126 | 3 | 0 | 0 | 0 | Phosphoric acid | 30 | A | B | A | P :0.0038 g/m$^2$ |
| 247 | #1 | GA | 0.2 | 127 | 3 | 0 | 0 | 0 | Phosphoric acid | 30 | A | A | A | P :0.0013 g/m$^2$ |
| 248 | #1 | GA | 0.2 | 128 | 3 | 0 | 0 | 0 | Phosphoric acid | 30 | A | C | A | V :0.0133 g/m$^2$ |
| 249 | #1 | GA | 0.2 | 129 | 3 | 0 | 0 | 0 | Phosphoric acid | 30 | A | B | A | V :0.0057 g/m$^2$ |
| 250 | #1 | GA | 0.2 | 130 | 3 | 0 | 0 | 0 | Phosphoric acid | 30 | A | A | A | V :0.0220 g/m$^2$ |
| 251 | #1 | GA | 0.2 | 131 | 3 | 0 | 0 | 0 | Phosphoric acid | 30 | A | A | A | Cr : 0.0156 g/m$^2$ |
| 252 | #1 | GA | 0.2 | 132 | 3 | 0 | 0 | 0 | Phosphoric acid | 30 | A | A | A | Cr : 0.0078 g/m$^2$ |

EP 3 241 921 B1

As is clear from Table 3 to Table 5 and Table 7 above, it is shown that the zinc-based plated steel sheet according to the present invention has not only excellent coating adhesiveness after hot pressing but also excellent chemical conversion treatability and corrosion resistance.

The preferred embodiment(s) of the present invention has/have been described above with reference to the accompanying drawings, whilst the present invention is not limited to the above examples. A person skilled in the art may find various alterations and modifications within the scope of the appended claims, and it should be understood that they will naturally come under the technical scope of the present invention.

## Claims

1. A method of obtaining a hot pressed steel material by providing a zinc-based plated steel sheet comprising:

   a zinc-based plated steel sheet that is a base metal; and
   a surface treatment layer formed on at least one surface of the zinc-based plated steel sheet, wherein, before hot pressing, the surface treatment layer consists of one or more compounds selected from the group consisting of magnesium oxide, magnesium chloride, magnesium nitrate and magnesium sulfate, and a resin, and optionally at least one of one or more phosphorus-containing compounds, one or more vanadium-containing compounds, one or more aluminum-containing compounds, one or more silicon-containing compounds, and one or more chromium-containing compounds in the following range as the contained amount per one surface, and optionally at least one of zirconia, lanthanum oxide, cerium oxide, neodymium oxide, titanium oxide, nickel oxide, tin(IV) oxide, pigment or anti-rust pigment, a crosslinker,
   the one or more phosphorus-containing compounds: not less than 0.0 $g/m^2$ and not more than 0.01 $g/m^2$ on a P basis,
   the one or more vanadium-containing compounds: not less than 0.0 $g/m^2$ and not more than 0.01 $g/m^2$ on a V basis,
   the one or more aluminum-containing compounds: not less than 0.0 $g/m^2$ and not more than 0.005 $g/m^2$ on an Al basis,
   the one or more silicon-containing compounds: not less than 0.0 $g/m^2$ and not more than 0.005 $g/m^2$ on a Si basis, and
   the one or more chromium-containing compounds: not less than 0.0 $g/m^2$ and not more than 0.01 $g/m^2$ on a Cr basis,
   the amount of the one or more compounds selected from the group consisting of magnesium oxide, magnesium chloride, magnesium nitrate and magnesium sulfate is not less than 0.2 $g/m^2$ and not more than 5.0 $g/m^2$ per one surface on a magnesium oxide basis, and

   performing hot pressing on said zinc-based plated steel sheet, wherein said zinc-based plated steel sheet is heated to 700 to 1000°C, and is then press-molded.

2. The method according to claim 1, wherein the one or more magnesium compounds are magnesium oxide.

3. The method according to claim 2, wherein the amount of the magnesium oxide contained is not less than 0.4 $g/m^2$ and not more than 2.5 $g/m^2$ per one surface on a magnesium oxide basis.

4. The method according to claim 2 or 3, wherein a particle size of the magnesium oxide is not less than 5 nm and not more than 100 nm.

5. The method according to any one of claims 2 to 4, wherein a particle size of the magnesium oxide is not less than 10 nm and not more than 50 nm.

6. The method according to claim 1, wherein the one or more magnesium compounds are one or two compounds selected from the group consisting of magnesium nitrate and magnesium sulfate.

7. The method according to claim 6, wherein the amount of the one or two compounds selected from the group consisting of magnesium nitrate and magnesium sulfate contained is not less than 0.4 $g/m^2$ and not more than 2.5 $g/m^2$ per one surface.

**Patentansprüche**

1. Verfahren zum Herstellen eines heißgepressten Stahlmaterials durch Bereitstellen eines plattierten Stahlblechs auf Zinkbasis, mit:

   einem plattierten Stahlblech auf Zinkbasis, das ein Basismetall ist; und
   einer Oberflächenbehandlungsschicht, die auf mindestens einer Oberfläche des plattierten Stahlblechs auf Zinkbasis ausgebildet ist, wobei die Oberflächenbehandlungsschicht vor dem Heißpressen aus einer oder mehreren Verbindungen, die ausgewählt sind aus der Gruppe bestehend aus Magnesiumoxid, Magnesiumchlorid, Magnesiumnitrat und Magnesiumsulfat, und einem Harz, und optional mindestens einer unter einer oder mehreren phosphorhaltigen Verbindungen, einer oder mehreren vanadiumhaltigen Verbindungen, einer oder mehreren aluminiumhaltigen Verbindungen, einer oder mehreren siliciumhaltigen Verbindungen und einer oder mehreren chromhaltigen Verbindungen im folgenden Bereich als eine enthaltene Menge pro Flächeneinheit enthalten, und optional mindestens einer Komponente unter Zirkoniumoxid, Lanthanoxid, Ceroxid, Neodymoxid, Titanoxid, Nickeloxid, Zinn(IV)oxid, Pigment oder Rostschutzpigment und einem Vernetzungsmittel besteht,
   die eine oder die mehreren phosphorhaltigen Verbindungen: nicht weniger als 0,0 g/m$^2$ und nicht mehr als 0,01 g/m$^2$ auf einer P-Basis,
   die eine oder die mehreren vanadiumhaltigen Verbindungen: nicht weniger als 0,0 g/m$^2$ und nicht mehr als 0,01 g/m$^2$ auf einer V-Basis,
   die eine oder die mehreren aluminiumhaltigen Verbindungen: nicht weniger als 0,0 g/m$^2$ und nicht mehr als 0,005 g/m$^2$ auf einer Al-Basis,
   die eine oder die mehreren siliciumhaltigen Verbindungen: nicht weniger als 0,0 g/m$^2$ und nicht mehr als 0,005 g/m$^2$ auf einer Si-Basis, und
   die eine oder die mehreren chromhaltigen Verbindungen: nicht weniger als 0,0 g/m$^2$ und nicht mehr als 0,01 g/m$^2$ auf einer Cr-Basis,
   wobei die Menge der einen oder mehreren Verbindungen, die ausgewählt sind aus der Gruppe bestehend aus Magnesiumoxid, Magnesiumchlorid, Magnesiumnitrat und Magnesiumsulfat, nicht weniger als 0,2 g/m$^2$ und nicht mehr als 5,0 g/m$^2$ pro Oberfläche auf einer Magnesiumoxidbasis beträgt; und
   Ausführen eines Heißpressprozesses bezüglich des plattierten Stahlblechs auf Zinkbasis, wobei das plattierte Stahlblech auf Zinkbasis auf 700 bis 1000°C erwärmt und dann pressgeformt wird.

2. Verfahren nach Anspruch 1, wobei die eine oder die mehreren Magnesiumverbindungen Magnesiumoxid sind.

3. Verfahren nach Anspruch 2, wobei die Menge des enthaltenen Magnesiumoxids nicht weniger als 0,4 g/m$^2$ und nicht mehr als 2,5 g/m$^2$ pro Oberfläche auf Magnesiumoxidbasis beträgt.

4. Verfahren nach Anspruch 2 oder 3, wobei eine Partikelgröße des Magnesiumoxids nicht weniger als 5 nm und nicht mehr als 100 nm beträgt.

5. Verfahren nach einem der Ansprüche 2 bis 4, wobei die Partikelgröße des Magnesiumoxids nicht weniger als 10 nm und nicht mehr als 50 nm beträgt.

6. Verfahren nach Anspruch 1, wobei die eine oder die mehreren Magnesiumverbindungen eine oder zwei Verbindungen sind, die ausgewählt sind aus der Gruppe bestehend aus Magnesiumnitrat und Magnesiumsulfat.

7. Verfahren nach Anspruch 6, wobei die Menge der einen oder zwei Verbindungen, die ausgewählt sind aus der Gruppe bestehend aus Magnesiumnitrat und Magnesiumsulfat, nicht weniger als 0,4 g/m$^2$ und nicht mehr als 2,5 g/m$^2$ pro Oberfläche beträgt.

**Revendications**

1. Procédé d'obtention d'un matériau d'acier pressé à chaud en fournissant une tôle d'acier plaquée à base de zinc comprenant :

   une tôle d'acier plaquée à base de zinc qui est un métal de base ; et
   une couche de traitement de surface formée sur au moins une surface de la tôle d'acier plaquée à base de zinc, dans lequel, avant le pressage à chaud, la couche de traitement de surface consiste en un ou plusieurs composés choisis dans le groupe consistant en oxyde de magnésium, chlorure de magnésium, nitrate de magnésium et sulfate de magnésium, et une résine, et éventuellement au moins un d'un ou plusieurs composés contenant du phosphore, un ou plusieurs composés contenant du vanadium, un ou plusieurs composés contenant de l'aluminium, un ou plusieurs composés contenant du silicium, et un ou plusieurs composés contenant du chrome dans l'intervalle suivant comme la quantité contenue pour une surface, et éventuellement au moins un d'oxyde de zirconium, oxyde de lanthane, oxyde de cérium, oxyde de néodyme, oxyde de titane, oxyde de nickel, oxyde d'étain (IV), pigment ou pigment antirouille, un agent de réticulation,

les un ou plusieurs composés contenant du phosphore : au moins 0,0 g/m² et au plus 0,01 g/m² sur une base de P,

les un ou plusieurs composés contenant du vanadium : au moins 0,0 g/m² et au plus 0,01 g/m² sur une base de V,

les un ou plusieurs composés contenant de l'aluminium : au moins 0,0 g/m² et au plus 0,005 g/m² sur une base d'Al,

les un ou plusieurs composés contenant du silicium : au moins 0,0 g/m² et au plus 0,005 g/m² sur une base de Si, et

les un ou plusieurs composés contenant du chrome : au moins 0,0 g/m² et au plus 0,01 g/m² sur une base de Cr, la quantité des un ou plusieurs composés choisis dans le groupe consistant en oxyde de magnésium, chlorure de magnésium, nitrate de magnésium et sulfate de magnésium est d'au moins 0,2 g/m² et d'au plus 5,0 g/m² pour une surface sur une base d'oxyde de magnésium, et

en réalisant un pressage à chaud sur ladite tôle d'acier plaquée à base de zinc, dans lequel ladite tôle d'acier plaquée à base de zinc est chauffée à de 700 à 1 000°C, et est ensuite moulée sous pression.

2. Procédé selon la revendication 1, dans lequel les un ou plusieurs composés de magnésium sont l'oxyde de magnésium.

3. Procédé selon la revendication 2, dans lequel la quantité de l'oxyde de magnésium contenue est d'au moins 0,4 g/m² et d'au plus 2,5 g/m² pour une surface sur une base d'oxyde de magnésium.

4. Procédé selon la revendication 2 ou 3, dans lequel une taille de particule de l'oxyde de magnésium est d'au moins 5 nm et d'au plus 100 nm.

5. Procédé selon l'une quelconque des revendications 2 à 4, dans lequel une taille de particule de l'oxyde de magnésium est d'au moins 10 nm et d'au plus 50 nm.

6. Procédé selon la revendication 1, dans lequel les un ou plusieurs composés de magnésium sont un ou deux composés choisis dans le groupe consistant en nitrate de magnésium et sulfate de magnésium.

7. Procédé selon la revendication 6, dans lequel la quantité des un ou deux composés choisis dans le groupe consistant en nitrate de magnésium et sulfate de magnésium est d'au moins 0,4 g/m² et d'au plus 2,5 g/m² pour une surface.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003073774 A
- JP 2003129209 A
- JP 2003126921 A
- JP 2004323897 A
- JP 2007063578 A
- JP 2007291508 A
- JP 2004270029 A

- JP 2011129084 A
- US 5283131 A
- EP 0508479 A2
- EP 1253218 A1
- KR 20030053830 A
- JP 2001152355 A